# EUROPEAN PATENT APPLICATION

(11) **EP 4 794 251 A1**
(43) Date of publication of application: **19.08.2026**
(21) Application number: 26157772.0
(22) Date of filing: 11.02.2026
(51) Int. Cl.: H04L 9/00, H04L 9/08, H04L 9/30, H04L 9/32

(54) **SYSTEM FOR SECURE QUANDLE-BASED CRYPTOGRAPHIC FRAMEWORK IN VIRTUAL ENVIRONMENTS**

(30) Priority: 12.02.2025 IL 31898025; 18.08.2025 US 202519302481
(71) Applicant: Mellanox Technologies, Ltd., 2069200 Yokneam (IL)
(72) Inventor: MENTOVICH, Elad, 2069200 Yokneam (IL); ZAHAVI, Eitan, 2069200 Yokneam (IL); HASSON RUSO, Ran, 2069200 Yokneam (IL); COHEN, Eliahu, 5290002 Ramat Gan (IL); CARMI, Avishy, 2069200 Yokneam (IL)
(74) Representative: Mathys & Squire

(57) **Abstract**

Systems, computer program products, and methods are described for secure quandle-based cryptographic framework in virtual environments. An example system may generate unique quandle-based encryption keys to protect primary information (e.g., financial data, personally identifiable information) while sharing supplementary information (e.g., session IDs, authentication tokens) in response to authentication requests. The example system may allow for entity authentication without requiring the exchange of sensitive information. In some embodiments, a third party may authenticate entities within the virtual environment, such that no sensitive data is shared directly between interacting entities. The example system may be applied in contexts such as secure financial transactions, identity verification, product authenticity checks, and/or the like.

## Description

### TECHNOLOGICAL FIELD

Example embodiments of the present disclosure relate to quandle-based cryptographic framework in virtual environments, enabling secure communication, authentication, and data transfer between entities without compromising sensitive information.

### BACKGROUND

Virtual environments have seen widespread adoption across various sectors, including finance, healthcare, and digital communications, where users and entities interact and exchange information over networked systems. However, these interactions are vulnerable to security threats such as data breaches, identity theft, and unauthorized access to sensitive information. Conventional encryption methods, while effective to some degree, often require the exchange of sensitive data, which introduces risks of exposure during transmission. Furthermore, existing encryption techniques may struggle to balance the need for security with the performance demands of real-time communications. As such, there is a need for an advanced cryptographic framework that enables secure interactions between entities in virtual environments without compromising the privacy of sensitive information, while also maintaining flexibility and efficiency.

Applicant has identified a number of deficiencies and problems associated with secure communication in virtual environments. Many of these identified problems have been solved by developing solutions that are included in embodiments of the present disclosure, many examples of which are described in detail herein.

### GENERAL DESCRIPTION

The invention is defined by the claims. In order to illustrate the invention, aspects and embodiments which may or may not fall within the scope of the claims are described herein.

Systems, methods, and computer program products are therefore provided for quandle-based cryptographic framework in virtual environments.

In one aspect, a system for secure quandle-based cryptographic framework in virtual environments is presented. The system comprising: a first entity configured to operate within a virtual environment; a second entity configured to operate within the virtual environment; wherein the first entity is configured to: receive, from the second entity, an authentication request to allow access to a resource associated with the second entity; encrypt, using a quandle-based cryptographic framework, primary information (pi) associated with the first entity using a first public key (e1), wherein the first public key (e1) is associated with the first entity; transmit the encrypted primary information (epi) and supplementary information (s) associated with the first entity to the second entity in response to the authentication request, and wherein the second entity is configured to: authenticate the first entity based on the encrypted primary information (epi) and the supplementary information (s); and authorize the first entity to access the resource in response to successful authentication of the first entity.

In some embodiments, the first entity is further configured to transmit an access request to the second entity, wherein the access request comprises a request to access the resource, and the second entity is configured to transmit the authentication request to the first entity in response to receiving the access request.

In some embodiments, the first entity is further configured to: generate the encrypted primary information (epi) based on the primary information (pi), an encoding variable (y), and the first public key (e1), wherein epi = pi ▷ y, wherein ▷ is a binary operation that satisfy axioms of a quandle.

In some embodiments, 0 ≤ pi ≤ n - 1, wherein n is a composite number of the form, n = p · q, and wherein p and q are prime numbers.

In some embodiments, $pi ⊳ y = y {\left(\frac{pi}{y}\right)}^{e 1}$, wherein 1 < e1 < ϕ(n), wherein ϕ(n) is Euler's totient function, and wherein ϕ(n) = ϕ(p · q) = (p - 1) · (q - 1).

In some embodiments, the first entity is further configured to: establish an initial communication link with the second entity, and wherein transmitting the encrypted primary information (epi) comprises using the initial communication link.

In some embodiments, the first public key (e1) is a short key having a length that is less than or equal to 1024 bits.

In some embodiments, the first entity is configured to: transition from the initial communication link to a sustained communication link upon successful authorization of the first entity to access the resource.

In some embodiments, transitioning from the initial communication link to the sustained communication link further comprises transitioning the first public key (e1) from the short key to a long key having a length that is greater than or equal to 2048 bits.

In some embodiments, the primary information (pi) comprises at least one of financial information, Personally Identifiable Information (PII), or internal system information.

In some embodiments, the supplementary information (s) comprises at least one of session identification information, authentication token information, payment token information, or entity status information.

In another aspect, a method for secure quandle-based cryptographic framework in virtual environments is presented. The method comprising: receiving, at a first entity, an authentication request from a second entity to allow access to a resource associated with the second entity; encrypting, using a quandle-based cryptographic framework, primary information (pi) associated with the first entity using a first public key (e1), wherein the first public key (e1) is associated with the first entity; and transmitting the encrypted primary information (epi) and supplementary information (s) associated with the first entity to the second entity in response to the authentication request, wherein the second entity is configured to authenticate the first entity based on the encrypted primary information (epi) and the supplementary information (s), and wherein the first entity and the second entity are configured to operate within a virtual environment.

In yet another aspect, a system for secure quandle-based cryptographic framework in virtual environments is presented. The system comprising: a first entity configured to operate within a virtual environment; a second entity configured to operate within the virtual environment; and a third entity configured to provide authentication; wherein the first entity is configured to: receive, from the second entity, an authentication request to allow access to a resource associated with the second entity, wherein the authentication request comprises a second public key (e2) associated with the second entity; encrypt, using a quandle-based cryptographic framework, information (i) associated with the first entity using a third public key (e3), wherein the third public key (e3) is associated with the third entity; and transmit, to the third entity, the encrypted information (ei) and the second public key (e2), wherein the third entity is configured to: authenticate the first entity based on the authentication request and the encrypted information (ei); and authorize the second entity to provide the first entity with access to the resource.

In yet another aspect, a method for secure quandle-based cryptographic framework in virtual environments is presented. The method comprising: receiving, from a second entity, an authentication request to allow access to a resource associated with the second entity, wherein the authentication request comprises a second public key (e2) associated with the second entity; encrypting, using a quandle-based cryptographic framework, information (i) associated with the first entity using a third public key (e3), wherein the third public key (e3) is associated with a third entity; and transmitting, to the third entity, the encrypted information (ei) and the second public key (sk), wherein the third entity is configured to authenticate the first entity based on the authentication request and the encrypted information (ei).

Systems, computer program products, and methods are described for secure quandle-based cryptographic framework in virtual environments. An example system may generate unique quandle-based encryption keys to protect primary information (e.g., financial data, personally identifiable information) while sharing supplementary information (e.g., session IDs, authentication tokens) in response to authentication requests. The example system may allow for entity authentication without requiring the exchange of sensitive information. In some embodiments, a third party may authenticate entities within the virtual environment, such that no sensitive data is shared directly between interacting entities. The example system may be applied in contexts such as secure financial transactions, identity verification, product authenticity checks, and/or the like.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE DRAWINGS

Having described certain example embodiments of the present disclosure in general terms above, reference will now be made to the accompanying drawings. The components illustrated in the figures may or may not be present in certain embodiments described herein. Some embodiments may include fewer (or more) components than those shown in the figures.
FIG. 1 illustrates an example system environment, in accordance with an embodiment of the disclosure;
FIG. 2 illustrates a schematic diagram of an example datacenter network architecture, in accordance with an embodiment of the disclosure;
FIG. 3 illustrates a schematic diagram of an example server system architecture, some or all of which may be included in the server system, in accordance with an embodiment of the disclosure;

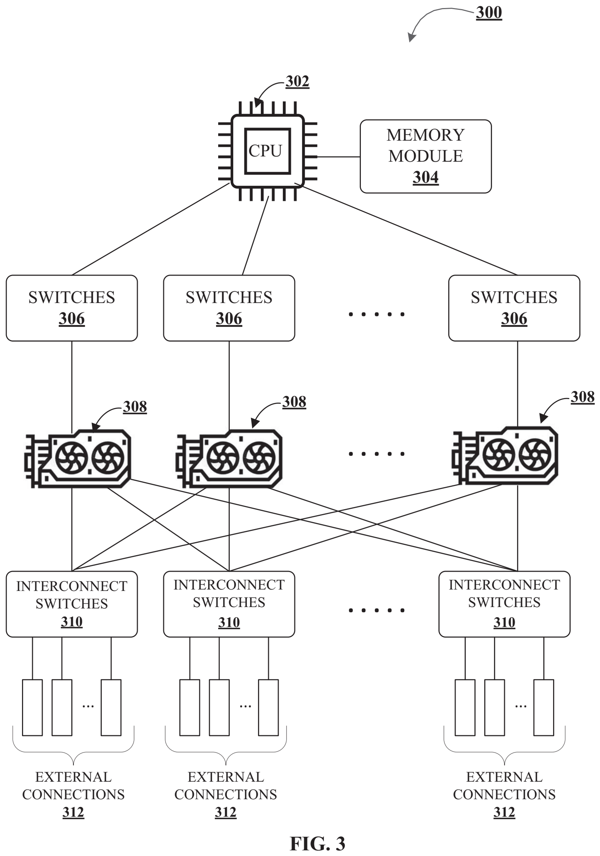

FIG. 3 illustrates a schematic block diagram of example circuitry, some or all of which may be included in an end-point device, in accordance with an embodiment of the disclosure;

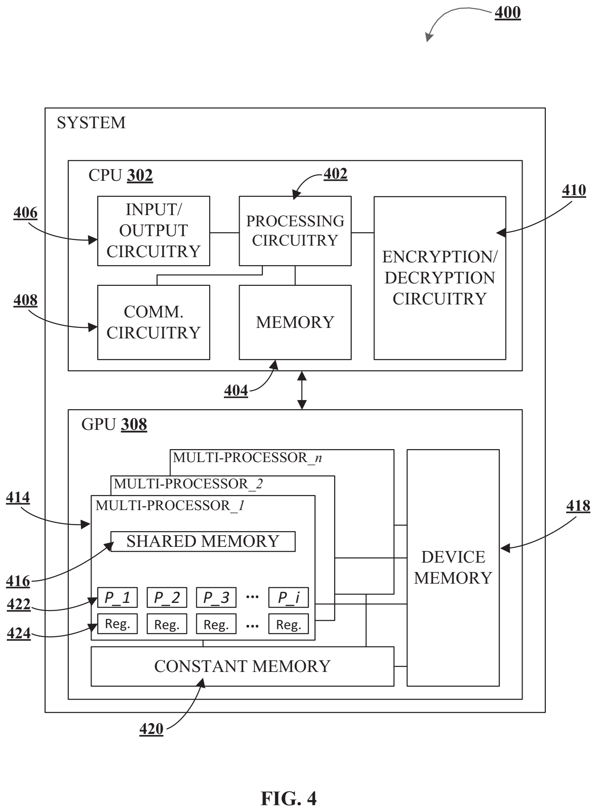

FIG. 4 illustrates a schematic diagram of example circuitry, some or all of which may be included in a system, in accordance with an embodiment of the disclosure;

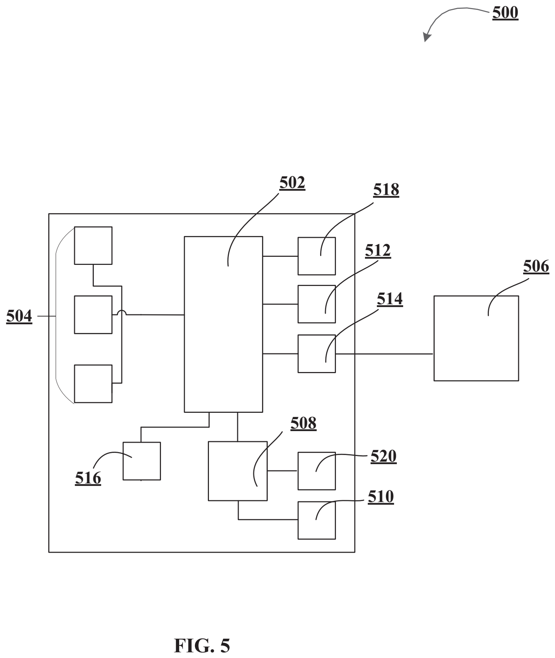

FIG. 5 depicts a component-level structure of end-point device, in accordance with an embodiment of the disclosure; and

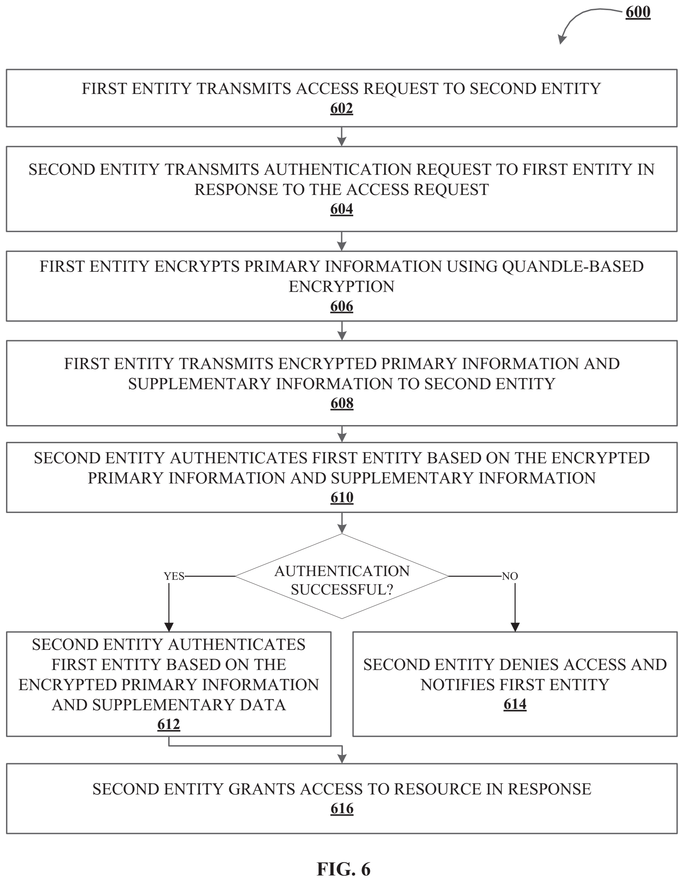

FIG. 6 illustrates an example method for direct authentication between two entities in a virtual environment, in accordance with an embodiment of the disclosure;

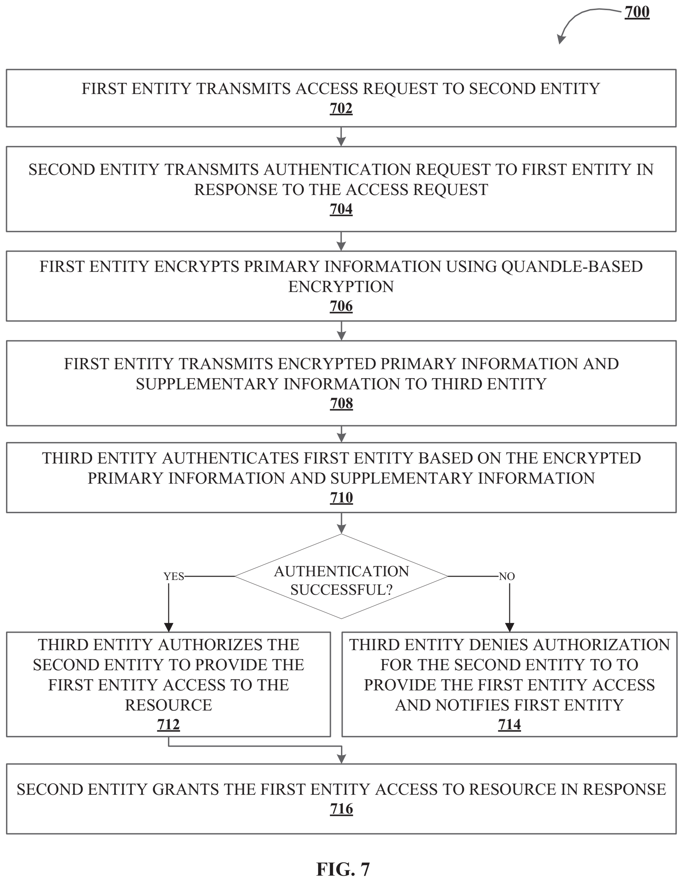

FIG. 7 illustrates an example method for third-party mediated authentication in a virtual environment, in accordance with an embodiment of the disclosure; and

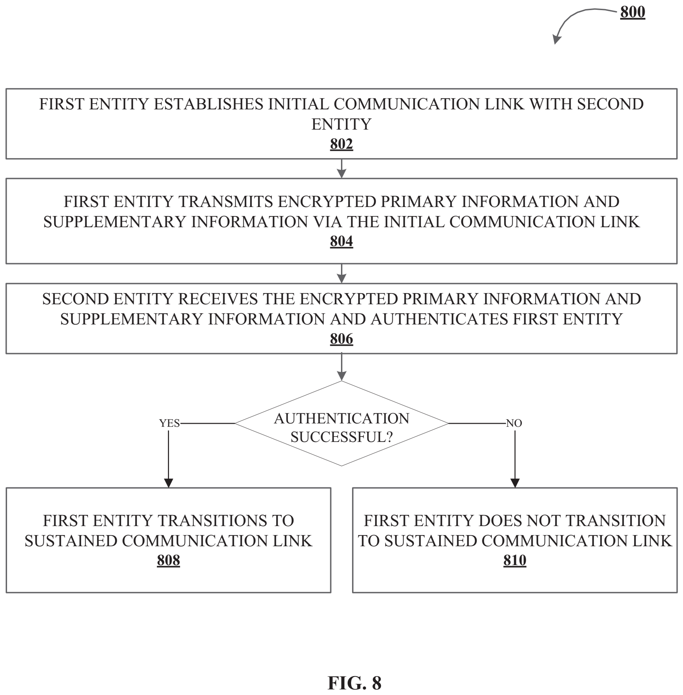

FIG. 8 illustrates an example method for continued secure communication between entities in virtual environments, in accordance with an embodiment of the disclosure.

### DETAILED DESCRIPTION

### Overview

Embodiments of the invention embrace a quandle-based cryptographic framework to achieve secure data transfer between entities in contact without risking data leakage or security breaches in a virtual environment. Quandle-based cryptography allows for the flexibility in adjusting security levels by controlling the length of the encryption keys and encoding variables. Such flexibility allows a high degree of freedom to balance between key length and the desired strength of security in the virtual environment. An example system allows entities in virtual environments to interact and share information securely, fostering mutual trust. The example system allows entities to interact without the need to share each other's sensitive information. The example system generates unique quandle-based encryption keys to safeguard primary information (e.g., financial data, personally identifiable information, internal system data, etc.) associated with each entity while sharing supplementary information (session ID, authentication tokens, payment tokens, status updates, etc.) in response to authentication requests. In this way, the example system allows for authentication (e.g., identification, verification, and/or the like) of entities without requiring exchange of any sensitive information. Alternatively or additionally, a third party, which may be associated with the virtual environment, can be used to authenticate the two interacting entities without requiring the interacting entities to exchange sensitive information directly. The third-party authentication further secures the interaction by ensuring that both entities are authenticated without compromising their private data. Example applications may include facilitating transactions without providing credit card information, ensuring financial data remains secure, allowing users to identify themselves without sharing ID numbers or names, protecting personal identity, enabling verification of product authenticity without direct interaction with the seller, reducing fraud risks, and/or the like.

Where possible, any terms expressed in the singular form herein are meant to also include the plural form and vice versa, unless explicitly stated otherwise. Also, as used herein, the term "a" and/or "an" shall mean "one or more," even though the phrase "one or more" is also used herein. Furthermore, when it is said herein that something is "based on" something else, it may be based on one or more other things as well. In other words, unless expressly indicated otherwise, as used herein "based on" means "based at least in part on" or "based at least partially on." Like numbers refer to like elements throughout.

As used herein, "entity" may refer to any individual, user, device, system, or organization that interacts with the virtual network through an associated end-point device. An entity may represent a person, a group of individuals, an automated system, or a corporate or organizational body that engages in secure communication, data exchange, or transactional processes within the virtual environment. Each entity may be represented within the virtual network by an avatar, which may serve as the entity's virtual presence or identity in the system. Entities may vary in nature, including but not limited to users accessing the network through personal computing devices, automated systems (such as IoT devices) transmitting data for processing, or servers conducting large-scale operations on behalf of an organization. In some embodiments, entities may also include external systems or third-party service providers that authenticate or facilitate interactions within the virtual network.

As used herein, "operatively coupled" may mean that the components are electronically or optically coupled and/or are in electrical or optical communication with one another. Furthermore, "operatively coupled" may mean that the components may be formed integrally with each other or may be formed separately and coupled together. Furthermore, "operatively coupled" may mean that the components may be directly connected to each other or may be connected to each other with one or more components (e.g., connectors) located between the components that are operatively coupled together. Furthermore, "operatively coupled" may mean that the components are detachable from each other or that they are permanently coupled together.

As used herein, "determining" may encompass a variety of actions. For example, "determining" may include calculating, computing, processing, deriving, investigating, ascertaining, and/or the like. Furthermore, "determining" may also include receiving (e.g., receiving information), accessing (e.g., accessing data in a memory), and/or the like. Also, "determining" may include resolving, selecting, choosing, calculating, establishing, and/or the like. Determining may also include ascertaining that a parameter matches a predetermined criterion, including that a threshold has been met, passed, exceeded, satisfied, etc.

Furthermore, as would be evident to one of ordinary skill in the art in light of the present disclosure, the terms "substantially" and "approximately" indicate that the referenced element or associated description is accurate to within applicable engineering tolerances.

### Quandle-based Cryptographic Framework

Knot theory, a branch of topology, focuses on the study of knots and their properties, specifically how knots can be distinguished, categorized, and transformed into one another through continuous deformations without cutting or joining ends. This theoretical framework may be used to provide a concrete mathematical basis for developing cryptographic methods that are inherently resistant to known quantum computing threats. The application of knot theory to cryptography leverages the concept that knots and their transformations can represent data, encryption processes, and cryptographic keys. The invariants in knot theory (such as the Jones polynomial), which are properties that remain unchanged under knot deformation, offer a way to encode and secure information. These invariants can serve as the basis for cryptographic algorithms, where the complexity and difficulty of analyzing knot transformations provide security against unauthorized decryption. A tightly connected concept is that of a braid, which consists of a set of strands that may intertwine with each other vertically but do not intersect or overlap when viewed from above. Any knot can be represented as a closed braid, where the closure involves connecting the corresponding upper and lower ends of a braid without introducing new crossings. This operation transforms an open braid into a closed loop, or knot, preserving the topological features encoded in the braid structure.

The principle that two knots are equivalent if one can be transformed into the other through continuous deformation without cutting or stitching supports the security model of this cryptographic approach and can aid in traversing a noisy communication channel without losing the encoded information. In this context, the process of encryption can be conceptualized as the "knotting" of data, where the data is entangled in a complex knot structure. Decryption, conversely, involves "unknotting" the data, a process that requires knowledge of specific transformations, analogous to possessing the cryptographic key. The challenge of determining whether two knots are equivalent, particularly as knots increase in complexity, illustrates the difficulty of breaking the cryptographic scheme without the correct key. This highly complex task provides a significant barrier to both classical and quantum computational attacks.

The Reidmeister moves form the basis for determining when two knot diagrams represent the same knot, or in other words, when two knots are equivalent. The Type I move (twist and untwist) adds or removes a twist in the knot diagram. It involves creating or eliminating a single loop, effectively changing the local twisting of the strand. Despite its simplicity, the Type I move is powerful in demonstrating how a single twist does not change the essential properties of a knot. The Type II move (poke) involves two strands of the knot passing twice over or under each other. It can either introduce or remove a pair of crossings such that the strands remain unbroken and the overall topology of the knot is preserved. This move is particularly useful in illustrating how the interaction between different parts of the knot can be altered without affecting its fundamental characteristics. The Type III move (slide) involves sliding one strand over a crossing of two other strands. The Type III move does not change the number of crossings but alters the position of the strands around the crossings. The Type III move demonstrates the flexibility of knots in three-dimensional space, showing that the global structure of a knot can be preserved even as parts of it are rearranged. In the context of cryptography, the idea of knot equivalence through Reidemeister moves offers a metaphor for the encryption and decryption process. Just as a knot can be transformed through a series of moves without altering its essential characteristics, data can be encrypted into a complex form and later decrypted back to its original state, provided the correct sequence of transformations (analogous to the cryptographic key) is known.

Quandles are sets with binary operations satisfying axioms analogous to the Reidemeister moves used to manipulate knot diagrams. Embodiments of the invention contemplate an encryption framework employing the algebraic structure of quandles or racks to ensure secure, reversible encryption processes that allow for complex data manipulations while maintaining the integrity of the encrypted message. The axioms of quandles and racks facilitate the framework for encryption that mirrors operations on a message (plaintext) in the encrypted domain. Specifically, idempotency (quandle-specific) ensures that the encryption of a message using the same message as the encoding variable results in the message itself, a property that can be leveraged for consistency checks and to maintain structural patterns in encrypted data; invertibility allows for the reversible encryption process, ensuring that encrypted data (ciphertext) can be decrypted back to its original form (message) without loss of information, which is fundamental to any encryption scheme; self-distributivity enables complex manipulations of encrypted data that parallel operations on a message, allowing for certain computations to be performed directly on ciphertexts without revealing their contents. Self-distributivity allows for operations such as partially homomorphic encryption, where it is desirable to perform algebraic operations on encrypted data.

By exploiting quandle and rack axioms, the systems, methods, and computer program products described herein facilitate operations on ciphertexts similar to those performed on messages, without compromising confidentiality. Unlike conventional cryptographic algorithms that rely on associative operations (e.g., group operations), the non-associative nature of quandle operations adds a level of complexity to the cryptographic process. This way, the novel cryptographic framework proposed herein increases the level of security provided against conventional and sophisticated attacks, enabling secure data processing and transmission in digital environments. In the examples described herein, x ▷ y and c ◁ y are binary operations. Indeed, the two operations may be implemented in a number of ways, as long as these implementations satisfy the axioms of quandle and/or rack algebra. In one example embodiment, $x ⊳ y = y {\left(\frac{x}{y}\right)}^{e}$ and $c ⊲ y = y {\left(\frac{c}{y}\right)}^{f}$, where x may refer to the message to be transmitted, y may be an encoding variable (public or private, depending on the application), e may refer to public key, c may refer to the ciphertext, and f may refer to the private key. Unlike many other cryptographic frameworks, x, y, and c are rational numbers, rather than just integers. In the proposed encryption framework, the selection of variables, such as e and f, may draw parallels to the established methodologies employed in the Rivest-Shamir-Adleman (RSA) algorithm, particularly in the choice and mathematical properties of specific parameters. Specifically, e may be chosen such that 1 < e < ϕ(n) and e is coprime to ϕ(n), meaning that e and ϕ(n) share no common divisors other than 1. This ensures that e has a multiplicative inverse modulo ϕ(n). f may be calculated as the multiplicative inverse of e modulo ϕ(n). This means f is the number that satisfies the equation e · f = 1 mod ϕ(n). In other words, f is chosen such that the product of f and e, divided by ϕ(n), leaves a remainder of 1. Here, n is the product of two (often large) prime numbers p and q, and ϕ(n) is Euler's totient function defined as ϕ(n) = ϕ(p · q) = (p - 1) · (q - 1). Similar to the RSA algorithm, the Carmichael's totient function may be used instead of Euler's totient function for same or similar purposes.

Furthermore, x ▷ y and c ◁ y may be complementary (in accordance with the above invertibility property), ensuring a symmetrical relationship that supports their cryptographic utility. Specifically, while x ▷ y is used to encrypt the message (x), i.e., to generate the ciphertext (c), while c ◁ y is used in decryption to retrieve the message (x) from the ciphertext (c). In conventional cryptographic algorithms, such as RSA, the message (x), is an integer. However, the proposed relationship between x ▷ y and c ◁ y allows x and y to also be non-integer, or rational number, which increases the complexity of the encryption. Compared to RSA, the proposed relationship not only allows the message (x), to be a rational number, but also includes an encoding variable (y), which is non-existent in RSA and can also be any integer or rational number. This further increases the complexity of the encryption, thus strengthening security by making unauthorized decryption significantly more difficult. Indeed, when x is an integer and y = 1, the resulting relationship aligns with the RSA algorithm, representing a specific instance of the proposed cryptographic framework. What is more, the complexity of the encryption can be further strengthened by introducing additional encoding variables, such as a second encoding variable (z) (or many such variables as described herein), to the existing relationship, x ▷ y. Specifically, while x ▷ y ▷ z is used to encrypt the message (x) to generate the ciphertext (c), c ◁ z ◁ y may be used in decryption to retrieve the previously encrypted message (x). Here, the second encoding variable (z) is first decoded, followed by the encoding variable (y), to then retrieve the message (x). Similar to x and y, z can also be an integer or a rational number, further increasing the complexity of the encryption. In addition to introducing encoding variables, the complexity of the encryption can be further strengthened by using multiple public key - private key pairs (e-f pairs) for each encoding variable introduced. As such, at a minimum, the complexity of the proposed encryption framework aligns with RSA, potentially extending it.

The subject matter disclosed in the prior application filed in Israel, entitled Quandle-based cryptographic Framework, Application No. 313045, filed on May 22, 2024, which focuses on the quandle-based cryptographic framework, is hereby incorporated by reference in its entirety as if fully set forth herein. This incorporation is intended to provide further details, features, and embodiments related to the encryption methods and systems discussed in the present disclosure, and any modifications or adaptations within the scope of that application are considered applicable to the present system and method.

### Example System Environment

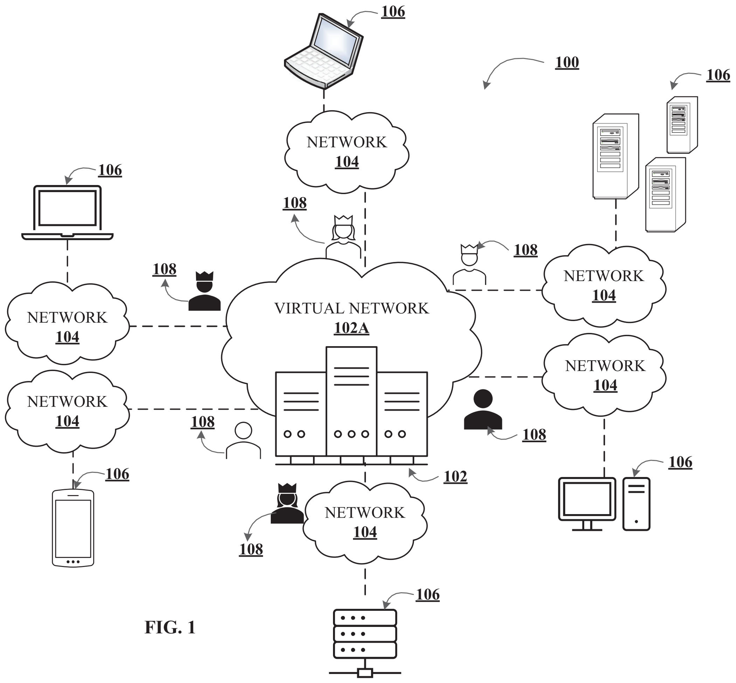

FIG. 1 illustrates an example system environment 100, in accordance with an embodiment of the disclosure. As shown in FIG. 1, the system environment 100 may include a datacenter 102, a virtual network 102A, networks 104, and end-point devices 106. The system environment 100 may support the connection of various end-point devices 106 (e.g., laptops, smartphones, servers, etc.) to the virtual network 102A through the networks 104. Each end-point device 106 may be represented within the virtual network 102A by corresponding avatars 108. The avatars 108 may interact within the virtual environment, while the underlying system ensures the secure transfer of data between these entities using advanced cryptographic methods, as described in more detail in FIGS. 4 and 5. The system environment 100 may provide a flexible infrastructure for virtual environments, enabling secure, encrypted interactions while maintaining entity privacy.

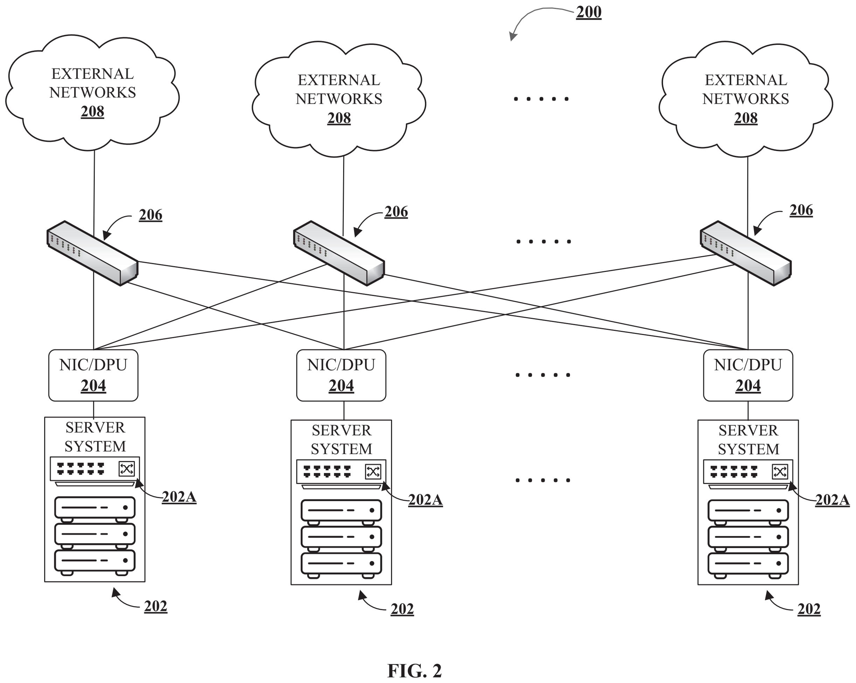

The datacenter 102 may be a centralized facility designed to house computing resources and related components. The primary function of the datacenter 102 may be to support the infrastructure required for advanced computational tasks, for efficient, secure, and reliable operations. The datacenter 102 may include building and structural components, including power supplies, cooling systems, fire suppression systems, and physical security measures that are configured to maintain optimal operating conditions and protect the equipment from environmental hazards and unauthorized access. At its core, the datacenter 102 may include high-performance servers or compute nodes, often arranged in racks, and connected through high-speed networks, as described in more detail in FIGS. 2, 3, and 4.

In specific embodiments, the datacenter 102 may host the virtual network 102A, which serves as a secure and flexible platform for managing virtual interactions between entities. The virtual network 102A may be an abstraction layer built on top of the physical infrastructure of the datacenter 102, leveraging its high-performance servers, network equipment, and storage resources. By hosting the virtual network 102A within the datacenter 102, the interactions and communications within the virtual environment may benefit from the same levels of security, redundancy, and computational power provided by the datacenter infrastructure.

The virtual network 102A may refer to a virtual environment in which multiple entities, represented by corresponding avatars 108, can interact with one another in a secure and controlled manner. Each entity's end-point device 106 may connect to the virtual network 102A via networks 104, and the avatar 108 corresponding to each end-point device may operate within the virtual environment. The virtual network 102A may comprise a variety of components and services, tailored to support secure, real-time interactions between avatars 108. In this regard, the virtual network 102A may support various applications, including financial transactions, healthcare data exchanges, educational collaborations, and/or other sensitive communications. The virtual network 102A may operate as a software-defined environment, meaning it may be dynamically controlled and managed by software, allowing for greater flexibility and scalability. Such a configuration may allow the virtual network 102A to allocate resources on-demand, optimize network traffic, and implement encryption algorithms in real time based on the needs of the interacting entities. In some embodiments, the virtual network 102A may support isolated virtual segments or sub-networks, ensuring that certain groups of entities interact within their own secure channels, further enhancing privacy and security. Additionally, the virtual network 102A is configured to handle large-scale, simultaneous interactions, allowing many entities to participate in the virtual environment concurrently without degradation of performance or security. Such scalability may be supported by the underlying hardware resources provided by the datacenter 102, which can dynamically allocate processing power, memory, and network bandwidth to meet the demands of the virtual network 102A. As such, the datacenter 102 may provide the necessary computational resources to support the activities within the virtual network 102A, including encryption and decryption operations, data validation, and secure communications.

The network 104 may operatively couple the datacenter 102 to the end-point devices 106 for data exchange and secure connectivity within the virtual network 102A. Each end-point device 106 may be connected to the virtual network 102A through its respective network 104, which may include a range of network types depending on the device and operational requirements. Examples of network 104 may include both wired and wireless communication networks, depending on the specific operational needs of the entities interacting within the virtual network 102A.

Wired communication networks may include an Internet Protocol (IP) network, an Ethernet network, a Fibre Channel network, or combinations thereof (e.g., Fibre Channel over Ethernet). These networks may provide high-speed connections that are well-suited for applications requiring reliable, consistent data transfer. For instance, an IP or Ethernet network may offer widespread compatibility and ease of integration, supporting various protocols and applications used by the datacenter 102 and the end-point devices 106. For high-performance applications within the virtual network 102A, such as those involving sensitive data or real-time transactions, a Fibre Channel network may be implemented for its reliability and speed in accessing storage resources. This makes Fibre Channel networks particularly beneficial for managing large volumes of data, such as in secure financial transactions or handling sensitive healthcare records. In cases where higher throughput and lower latency are part of the requirement, an InfiniBand (IB) network may be employed to facilitate rapid data transfers, making it ideal for high-performance computing (HPC) environments.

In contrast, wireless communication networks may be used to provide more flexible and mobile connectivity for end-point devices 106 that are not physically tethered to the network. These networks can include Wi-Fi, Bluetooth, cellular networks (e.g., 4G, 5G), or satellite-based networks. Wireless networks extend the reach of the virtual network 102A by enabling remote or mobile end-point devices 106 to securely access the virtual network 102A and the datacenter 102 from virtually any location. Wireless communication may be especially useful for portable devices such as smartphones, tablets, and laptops, allowing users to interact seamlessly within the virtual environment, represented by their corresponding avatars 108.

The end-point devices 106 may represent the diverse array of computing devices through which users or entities interact with the virtual network 102A, hosted within the datacenter 102. The end-point devices 106 may facilitate user access to the virtual environment and serve as the operational endpoints for transmitting and receiving data securely over the networks 104. The end-point devices 106 can range from personal computing devices to more complex server systems, depending on the user's requirements and the nature of the tasks performed within the virtual network 102A. For instance, the end-point devices 106 may include personal computers and laptops, specialized workstations and servers, Internet of Things (IoT) devices, and/or the like. In particular, personal computers and laptops may be used by individual users to access the virtual environment for tasks such as communication, collaboration, and resource access. Specialized workstations or servers, on the other hand, may be deployed by entities to perform more resource-intensive tasks, such as data analysis, simulations, or secure data management within the virtual network 102A. In some cases, IoT devices may be connected to the virtual network 102A to gather and transmit data for real-time processing and analysis. These devices may include sensors, smart devices, and other connected systems that provide valuable data to the virtual environment.

It should be understood that the system environment 100 may include additional components and functionalities within the scope of the present disclosure. The specific examples and embodiments described herein are not intended to limit the invention, but rather to illustrate potential configurations and implementations. Modifications, enhancements, or substitutions of elements may be made without departing from the spirit and scope of the invention. For example, the system environment 100 may incorporate additional servers, storage devices, networking infrastructure, specialized hardware accelerators (such as GPUs, TPUs, or FPGAs), or enhanced security modules to further optimize performance, scalability, and data security. Moreover, the networks 104 may support alternative or future network protocols, including those based on quantum networking, software-defined networking (SDN), or other next-generation communication technologies. The end-point devices 106 may encompass a wide range of future computing devices, including edge computing nodes, artificial intelligence agents, or autonomous systems that operate in the virtual network 102A. Additionally, the datacenter 102 may employ emerging technologies, such as advanced cooling systems, renewable energy sources, or self-healing infrastructure components to ensure efficiency and sustainability. Any and all combinations, sub-combinations, variations, or adaptations of the described elements are considered within the scope of this disclosure. The disclosure is intended to cover all such alternatives, modifications, and equivalents as fall within the true spirit and scope of the claims.

### Example Datacenter Network Architecture

FIG. 2 illustrates a schematic diagram of an example datacenter (e.g., datacenter 102) network architecture 200, in accordance with an embodiment of the disclosure. The datacenter network architecture 200 may include server systems 202, datacenter switches 206, and external networks 208. The server systems 202 may house computing resources. The datacenter switches 206 may manage and route data between the server systems 202 and the external networks 208. The external networks 208 may connect the datacenter network architecture 200 to external devices, services, or other datacenters, enabling communication beyond the datacenter.

The server systems 202 may house multiple servers, each containing various computing resources. These resources may include central processing units (CPUs), such as NVIDIA Grace^{™} CPUs, and graphics processing units (GPUs), such as NVIDIA^{®} H200 Tensor Core GPUs. The servers may also include memory, such as high-bandwidth memory (HBM) for GPUs, and storage devices, such as NVMe (Non-Volatile Memory Express) SSDs for fast data access. Each server within the server systems 202 may be configured to handle specific types of workloads, such as general-purpose computing, data processing, specialized tasks like artificial intelligence (AI) and machine learning (ML) applications, and/or the like. For example, NVIDIA^{®} Tensor Core GPUs may be used to accelerate AI and ML workloads by performing parallel processing of large datasets. The server systems 202 may be connected to one or more datacenter switches 206, allowing the servers systems 202 to communicate with other systems within the datacenter or external networks 208. The configuration of the server systems 202 may be scalable, allowing for additional servers, such as those with NVIDIA^{®} GPUs and CPUs, to be added or removed as needed based on computing requirements.

In some embodiments, the server systems 202 may include top-of-rack (ToR) switches 202A. The ToR switches 202A may connect each server system 202 to the broader datacenter network, typically using high-speed networking protocols such as Ethernet or InfiniBand^{®} protocols. The ToR switches 202A may reduce cable complexity by aggregating server connections within the rack and then linking to higher-layer switches, such as datacenter switches 206, within the datacenter. Each ToR switch may be connected to every server within its rack through short cables, and the switch may then uplink to the datacenter switches 206. ToR switches 202A in the server systems 202 may also support various network features such as VLAN segmentation, load balancing, and quality of service (QoS) management, ensuring optimized traffic flow within the rack and the datacenter as a whole. In some configurations, ToR switches 202A may offer redundancy by employing multiple uplinks to datacenter switches 206, providing fault tolerance in case of a switch or connection failure. Additionally or alternatively, the ToR switches 202A may be operatively coupled to the advanced datacenter processing units (NIC/DPUs) 204, enabling efficient offloading of data processing and security tasks, further reducing the computational burden on the server CPUs and improving overall data flow within the rack.

The NIC/DPU 204, may integrate network interface card (NIC) and data processing unit (DPU) functionalities to enhance the efficiency of data center operations. The NIC/DPU 204 may be configured to offload various network, storage, and security tasks from the server systems 202, in particular, CPUs in the server systems 202, allowing the CPUs to focus on compute-intensive workloads. The NIC/DPU 204 may facilitate high-speed data transmission, optimize data flow, and enable advanced network services with minimal impact on server performance. The NIC component within the NIC/DPU 204 may handle standard network functions, such as packet transmission and reception, supporting high-speed Ethernet or InfiniBand^{®} protocols. By facilitating fast data transfers between the server systems 202 and external networks 208, the NIC enables efficient communication across the datacenter environment. The NIC may also support offloading network protocol processing, reducing the overhead on server systems 202, in particular, CPUs in the server systems 202, and improving overall data throughput. The DPU component of the NIC/DPU 204 may extend these capabilities by offloading more advanced processing tasks, such as data encryption and decryption, packet inspection and filtering, virtualization support, and/or the like. In example embodiments, the NIC/DPU 204 may be NVIDIA BlueField^{®}-2 DPUs, which provide a high-performance platform for data center acceleration. The BlueField-2 architecture may include up to 8 Arm cores, enabling the NIC/DPU 204 to execute network, storage, and security tasks independently of the server systems 202, in particular, CPUs in the server systems 202. By performing these tasks closer to the data source, the NIC/DPU 204 may reduce data movement across the network, lower latency, and enhance overall system efficiency.

The NIC/DPU 204 may also include a dedicated memory subsystem, such as dynamic random-access memory (DRAM), to support local processing and ensure high-speed data access. Additionally, the NIC/DPU 204 may be configured to manage NVMe over Fabrics (NVMe-oF) storage protocols, allowing for efficient remote storage access and fast data retrieval. The combined NIC and DPU functionalities within the NIC/DPU 204 may support various advanced networking features, including traffic shaping and load balancing, remote direct memory access (RDMA), virtual machine and container isolation, and/or the like.

The datacenter switches 206 may manage the data flow between the server systems 202 and the external networks 208. The datacenter switches 206 may be responsible for routing and distributing data between servers within the datacenter and facilitating communication with external networks. Datacenter switches 206 may be configured to support various high-speed network protocols, such as Ethernet or InfiniBand^{®} protocols, depending on the performance and bandwidth requirements of the datacenter. The datacenter switches 206 may include optical switches, which use light signals for data transmission, offering high bandwidth and low latency for long-distance communication. Alternatively, the datacenter switches 206 may include electrical switches, which rely on electronic signals and may be used for shorter distances or when lower latency is a priority. In some configurations, hybrid switches may be used, combining both optical and electrical components to balance performance and flexibility. The datacenter switches 206 may be advanced networking switches, such as Nvidia Quantum-2 switches, configured to provide high throughput capabilities. The datacenter switches 206 may operate at different layers of the network stack, including Layer 2 (data link layer) and Layer 3 (network layer), to perform switching and routing functions. Multiple datacenter switches 206 may be interconnected to provide redundancy and load balancing for reliable data transfer even if one switch fails. The datacenter switches 206 may support scalable configurations, allowing the network architecture to expand as additional server systems 202 or external networks 208 are introduced.

In certain embodiments, the number and arrangement of datacenter switches 206 within the datacenter network architecture 200 may be based on the overall network topology deployed in the datacenter environment. The choice of network topology may influence the scalability, performance, fault tolerance, and bandwidth distribution of the network, thus affecting how many switches are required and how they are interconnected. Examples of network topology may include fat-tree topology, SlimFly topology, dragonfly topology, HyperX topology, torus topology, Clos (folded-Clos) topology, and/or the like. For instance, in a fat-tree topology, the network is structured as a multi-tiered hierarchy with equal-cost paths between any two endpoints. The fat-tree topology may be built using three layers of switches: leaf switches at the bottom layer, directly connected to the server systems 202, spine switches in the middle layer, which interconnect the leaf switches, and core switches at the top, which interconnect multiple sets of spine switches. In a SlimFly topology, the datacenter switches 206 may be arranged to minimize the average path length between servers, reducing communication latency. The total number of datacenter switches 206 may be fewer than in fat-tree topology, but their arrangement may be more complex to optimize the number of direct and indirect connections between nodes. Dragonfly topology may organize switches into groups (or "pods"), with high-bandwidth connections within each group and lower-bandwidth connections between groups. The datacenter switches 206 may be arranged into several pods, with each pod containing a set of leaf switches connected to server systems 202 and local spine switches. In addition, there may be fewer inter-pod connections than intra-pod connections. In hyperX topology, switches may be arranged in a multi-dimensional grid, with each switch connected to multiple neighboring switches in different dimensions. The total number of switches may scale with the number of dimensions and network size. In a torus topology, the datacenter switches 206 may be connected in a loop or ring structure. Torus topology may offer reduced wiring complexity and built-in redundancy, as each switch is connected to multiple adjacent switches. In larger datacenters, a higher-dimensional torus (e.g., 3D or 4D torus) may be implemented, where switches are arranged in a multi-layered grid. In a Clos topology, also known as a folded-Clos or CLOS architecture, the datacenter switches 206 may be arranged in multiple layers of switching stages, with each stage containing multiple switches. In this configuration, each server system 202 may connect to a set of leaf switches, which in turn connect to multiple spine switches. Additional spine and leaf switches may be added as the network grows, with the number of datacenter switches 206 increasing in proportion to the number of server systems and external networks connected.

The external networks 208 represent a range of connectivity options that facilitate communication between the datacenter and various external systems, such as other datacenters, cloud service providers, and/or the like. In specific embodiments, the external networks 208 may be network 104 configured to operatively couple the datacenter 102 to the end-point devices 106 for data exchange and secure connectivity within the virtual network 102A. The external networks 208 may include local area networks (LANs), which connect devices within a limited geographical area, as well as WANs that span larger distances and connect multiple LANs. Additionally, external networks 208 may include cloud networks, which provide scalable resources and services hosted remotely, and private networks, which offer secure communication channels for sensitive data transfer. Other types of external networks may include virtual private networks (VPNs) that enable secure access over the internet and Content Delivery Networks (CDNs) that optimize the delivery of content to end-users. Each of these external networks may utilize various communication protocols, such as Ethernet, InfiniBand^{®}, or MPLS (Multiprotocol Label Switching) protocols, to ensure reliable and efficient data transfer.

It should be noted that the description provided herein is merely one embodiment of the datacenter network architecture and the associated components, including the datacenter switches 206 and the NIC/DPU 204. Various modifications, alterations, and adaptations may be made without departing from the scope of the disclosure. The specific configurations, components, and functionalities described are illustrative and may be replaced or modified in other embodiments depending on the particular requirements of the datacenter environment. For example, different network topologies, alternative processing units, or variations in server configurations may be used to achieve similar objectives. As such, the scope of the invention should not be limited by the described embodiment.

### Example Server System Architecture

FIG. 3 illustrates a schematic diagram of an example server system architecture 300, some or all of which may be included in the server system 202 of FIG. 1, in accordance with an embodiment of the disclosure. The server system architecture 200 may include a CPU 302, memory modules 304, switches 306, GPUs 308, interconnect switches 310, and external connections 312. The CPU 302 may manage operations within the server system and communicate with the other components. The memory modules 304 may provide fast access to data for the CPU 302. The switches 306 may connect the CPU to the GPUs 308, while the interconnect switches 310 may facilitate communication between the GPUs 308. The external connections 312 may allow the server system to communicate with external networks or other systems.

The CPU 302 may manage overall operations within a server system (e.g., server system 202). The CPU 302 may execute instructions, process data, and control communication between the other components, including the memory module 304, switches 306, and GPUs 308. The CPU 302 may be connected to the memory module 304, providing fast access to data required for computational tasks. The CPU 302 may communicate with the GPUs 308 through the switches 306, enabling the CPU 302 to offload specialized computing tasks such as graphics rendering, AI, and ML workloads, and/or the like. Additionally, the CPU 302 may manage external communication via external connections 312, facilitating data exchange between the server system 202 and external networks 208 or other systems.

In some embodiments, the server system architecture 200 may be scalable to include multiple CPUs that are the same or similar to CPU 302, each managing its own set of resources such as memory, GPUs, and network connections. In such configurations, each CPU may communicate with other CPUs within the system via high-speed interconnects, such as NVLink^{®} interconnects, to coordinate processing tasks and balance workloads. Such a distributed architecture may improve performance by allowing parallel processing across multiple CPUs, which may be particularly useful for data-intensive applications such as AI, ML, and high-performance computing. The server system architecture 200 may allow for the addition of more CPUs as needed, depending on the computing requirements of the workload.

The memory module 304 may provide fast data access for the CPU 302, allowing the CPU to efficiently execute instructions and process data. The memory module 304 may include various types of memory, such as DRAM or high-bandwidth memory (HBM), depending on the specific performance requirements. The memory module 304 may be directly connected to the CPU 302 to minimize latency and enable high-speed data transfers between the memory and the CPU. The size and type of the memory module 304 may be scalable, allowing for adjustments based on the workload and data processing needs of the server system. Multiple memory modules that are the same or similar to the memory module 304 may be included in the architecture to support additional CPUs or to increase memory capacity as required by the computing tasks.

The switches 306 may facilitate communication between the CPU 302, GPUs 308, and other components within the server system 202. These switches 306 may be responsible for routing data between these components, ensuring efficient data flow and coordination during processing tasks. The switches 306 may include various types of technologies, such as Peripheral Component Interconnect Express (PCIe) switches, which connect the CPU to multiple GPUs, enabling high-speed data transfers, Ethernet switches for managing communication with external networks or InfiniBand^{®} switches designed for low-latency, high-throughput data transfers between servers in a high-performance computing environment, and/or the like. The architecture of the switches 306 may be scalable, accommodating additional components as needed to meet increasing performance demands. Furthermore, the switches 306 may provide features such as load balancing and fault tolerance, which improve the reliability and efficiency of data transmission within the server system.

The GPUs 308 may provide specialized processing capabilities for parallel computation tasks, such as those involved in AI, ML, and data-intensive computing workloads. Each GPU 308 may be connected to the CPU 302 via the switches 306, allowing the CPU 302 to offload certain tasks to the GPUs 308 for faster processing. The GPUs 308 may be configured to communicate with one another, either directly or through interconnect switches 310, to enable coordinated parallel processing and data sharing. The GPUs 308 may include HBM for faster access to data during computation. The number and type of GPUs 308 in the system may be scalable, allowing the architecture to accommodate varying performance needs depending on the specific workload. For example, the GPUs 308 may include NVIDIA^{®} H100 Tensor Core GPUs optimized for deep learning and AI inference, or NVIDIA^{®} A100 GPUs designed for high-performance computing and data analytics. The GPUs 308 may be used individually or in combination to meet the demands of various computational tasks.

The CPU 302 and the GPUs 308 may collectively serve as the system (described in further detail in FIG. 3) responsible for performing various functionalities described in the disclosure. In such a configuration, the CPU 302 may handle general-purpose processing and control operations, while the GPUs 308 may focus on parallel processing tasks, particularly those involving data-intensive computations. In specific embodiments, the system, or portions or components thereof, may be embodied as or include a chip or chipset. In other words, the system may include physical packages (e.g., chips) including materials, components, and/or wires on a structural assembly (e.g., a baseboard). The structural assembly may provide physical strength, conservation of size, and/or limitation of electrical interaction for component circuitry included thereon. The system, may therefore, in some cases, be configured to implement an embodiment of the disclosure on a single chip or as a single "system on a chip (SoC)." As such, in some cases, a chip or chipset may constitute means for performing one or more operations for providing the functionalities described herein. In this configuration, the CPU may be coupled to a GPU via die-to-die (D2D) interconnects, chip-to-chip (C2C) interconnects, such as a Ground-Referenced Signaling (GRS) interconnect, and/or the like, allowing for low-latency communication and high bandwidth between the CPU and GPU. Additionally, the CPU can connect to multiple GPUs using both D2D/C2C interconnects and high-speed interconnects, such as PCIe interconnects.

The interconnect switches 310 may facilitate communication between the GPUs 308, enabling high-speed data transfer and coordination for parallel processing tasks. These switches may include various types of interconnect technologies, such as NVIDIA^{®} NVSwitches (e.g., NVLink^{®} switches) or other high-performance fabric switches, depending on the system configuration. The high-speed interconnect switches 310 may allow multiple GPUs 308 to be interconnected in a fully integrated fabric, providing low-latency, high-bandwidth communication between the GPUs for efficient execution of AI, ML, and high-performance computing tasks. The interconnect switches 310 may support scalability, allowing additional GPUs 308 to be added to the system as needed. These interconnect switches 310 may also manage data flow between GPUs 308 and the CPU 302 via the switches 306, optimizing data throughput for complex computational workloads. In some configurations, the interconnect switches 310 may support hybrid or optical interconnect technologies to enhance performance based on system requirements.

The external connections 312 may provide interfaces between the server system 202 and external networks (e.g., external networks 208 shown in FIG. 1), via intermediate components (e.g., datacenter switches 206, NIC/DPU 204, and/or the like), facilitating communication with other datacenters, cloud service providers, or wide area networks (WANs). These connections may include pluggable modules (e.g., OSFP modules) or similar high-speed transceivers designed for efficient data transmission. The external connections 312 may support various networking protocols, such as Ethernet or InfiniBand^{®} protocols, depending on the requirements for data transfer speed and distance. Each external connection 312 may be linked to the switches 306 or interconnect switches 310, allowing for seamless data flow between the server system and external entities. The server system architecture may also support redundancy in external connections 312 to ensure continuous network availability, even in the event of a failure in one connection.

It should be understood that the server system architecture 200 described herein is merely one embodiment, and various modifications, substitutions, and alternatives may be made without departing from the scope of the disclosure. The specific components, configurations, and functionalities described are illustrative examples and may vary depending on the specific requirements of the server system or datacenter environment. For example, different types of CPUs, GPUs, memory modules, interconnect switches, and external connections may be used, and the architecture may be adapted to support alternative technologies or configurations. The server system architecture 200 may also be implemented in other forms or combined with additional hardware or software components to meet particular performance, scalability, or workload needs. Accordingly, the invention is not limited to the described embodiment.

### Example System Circuitry

FIG. 4 illustrates a schematic diagram of example circuitry, some or all of which may be included in a system 400, in accordance with an embodiment of the disclosure. The system 400 may include a CPU 302 and a GPU 308. The CPU 302 may include components such as a processing circuitry 402, memory 404, input/output circuitry 406, communications circuitry 408, and encryption/decryption circuitry 410. The GPU 308 may include a plurality of multi-processors 414, a shared memory 416, a device memory 418, a plurality of processors *P_1, P_2, ..., P_i* 422 for each multi-processor 414, a plurality of registers 424 for each multi-processor 414, and a constant memory 420. It should be understood that FIG. 4 is merely an illustrative embodiment and the system 400 may include more components, fewer components, or different components than those depicted. The arrangement of the components may also vary. Depending on specific implementation requirements, the system 400 may incorporate additional components or omit certain components. For instance, the system may include a CPU that is operatively coupled to multiple GPUs, where the GPUs are operatively interconnected using high-speed interconnects such as NVLink, enabling efficient data sharing and parallel processing. Additionally or alternatively, the system may include multiple CPUs that may be operatively interconnected via PCIe links, allowing for coordinated processing and workload distribution across the CPUs. In some configurations, both CPUs and GPUs may be interconnected using a combination of PCIe, NVLink, or other high-speed interconnect technologies.

In the system 400, the CPU 302 may serve as the primary processing unit responsible for general-purpose computation and control operations associated with one or more functions described herein (e.g., hosting a virtual network 102A). For instance, the CPU 302 may execute instructions, manage data flow, and coordinate the activities of other components within the system 400. The CPU 302 may include various circuitries, such as processing circuitry 402 for performing arithmetic and logical operations, memory 404 for storing data and instructions, input/output circuitry 406 for interfacing with external devices, communications circuitry 408 for handling data exchange with other systems or networks, and encryption/decryption circuitry 410 for performing cryptographic functions. As such, the CPU 302 may be configured to handle a wide range of workloads, including data processing, task scheduling, and control functions, enabling it to support various applications depending on the specific requirements of the system 400.

Although the term "circuitry" as used herein is described in some cases using functional language, it should be understood that the particular implementations necessarily include the use of particular hardware configured to perform the functions associated with the respective circuitry as described herein. It should also be understood that certain components may include similar or common hardware. For example, two sets of circuitries may both leverage use of the same processing circuitry, communication circuitry, memory, or the like to perform their associated functions, such that duplicate hardware is not required for each set of circuitries. It will be understood in this regard that some of the components described in connection with the system 400 may be housed together, while other components are housed separately. While the term "circuitry" should be understood broadly to include hardware, in some embodiments, the term "circuitry" may also include software for configuring the hardware. In some embodiments, other elements of the system 400 may provide or supplement the functionality of particular circuitry. For example, the processing circuitry 402 may provide processing functionality, the memory 404 may provide storage functionality, the communications circuitry 408 may provide network interface functionality, and the like.

The processing circuitry 402 may be embodied in a number of different ways and may, for example, include one or more processing circuitries configured to perform independently. Additionally, or alternatively, the processing circuitry 402 may include one or more processors configured in tandem via a bus to enable independent execution of instructions, pipelining, and/or multithreading. The processing circuitry 402 may, for example, be embodied as various means including one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an ASIC (application specific integrated circuit) or FPGA (field programmable gate array), or some combination thereof. The use of the term "processing circuitry" may be understood to include a single core processor, a multi-core processor, multiple processors internal to the apparatus, and/or remote or "cloud" processors. Accordingly, although illustrated in FIG. 4 as a single processor, in some embodiments, the processing circuitry 402 may include a plurality of processors. The plurality of processors may be embodied on a single computing device or may be distributed across a plurality of computing devices configured to function collectively. The plurality of processors may be in operative communication with each other and may be collectively configured to perform one or more functionalities of the system 400 as described herein.

In an example embodiment, the processing circuitry 402 may be configured to execute instructions stored in the memory 404 or otherwise accessible to the processing circuitry 402. Alternatively, or additionally, the processing circuitry 402 may be configured to execute hard-coded functionality. As such, whether configured by hardware or software methods, or by a combination thereof, the processing circuitry 402 may represent an entity (e.g., physically embodied in circuitry) capable of performing operations according to an embodiment of the present disclosure while configured accordingly. Alternatively, as another example, when the processing circuitry 402 is embodied as an executor of software instructions, the instructions may specifically configure the processing circuitry 402 to perform one or more algorithms and/or operations described herein when the instructions are executed. For example, these instructions, when executed by the processing circuitry 402, may cause the system 400 to perform one or more of the functionalities thereof as described herein.

The memory 404 may be non-transitory and may include, for example, one or more volatile and/or non-volatile memories, or some combination thereof. In other words, for example, the memory 404 may be an electronic storage device (e.g., a non-transitory computer readable storage medium). The memory 404 may be configured to store information, data, content, applications, instructions, or the like, for enabling an apparatus, e.g., the system 400, to carry out various functions in accordance with example embodiments of the present disclosure. Although illustrated in FIG. 4 as a single memory, the memory 404 may comprise a plurality of memory components. The plurality of memory components may be embodied on a single computing device or distributed across a plurality of computing devices. In various embodiments, the memory 404 may comprise, for example, a hard disk, random access memory (RAM), virtual memory, non-volatile memory (NVRAM), cache memory, flash memory, a compact disc read only memory (CD-ROM), digital versatile disc read only memory (DVD-ROM), an optical disc, circuitry configured to store information, or some combination thereof. The memory 404 may be configured to store information, data, applications, instructions, or the like for enabling the system 400 to carry out various functions in accordance with example embodiments discussed herein. For example, in at least some embodiments, the memory 404 may be configured to buffer data for processing by the processing circuitry 402. Additionally, or alternatively, in at least some embodiments, the memory 404 may be configured to store program instructions for execution by the processing circuitry 402. The memory 404 may store information in the form of static and/or dynamic information. This stored information may be stored and/or used by the system 400 during the course of performing its functionalities.

In some embodiments, the processing device 402 further includes input/output circuitry 406 that may, in turn, be in communication with the processing circuitry 402 to provide an audible, visual, mechanical, or other output and/or, in some embodiments, to receive an indication of an input from a user or another source. In that sense, the input/output circuitry 406 may include means for performing analog-to-digital and/or digital-to-analog data conversions. The input/output circuitry 406 may include support, for example, for a display, touchscreen, keyboard, mouse, image capturing device (e.g., a camera), microphone, and/or other input/output mechanisms. The input/output circuitry 406 may include a user interface and may include a web user interface, a mobile application, a kiosk, or the like. The input/output circuitry 406 may interface with one or more units, devices, sensors, actuators, communication modules, storage devices, external processing units, peripheral devices, and/or the like. These outputs may then be transmitted to one or more destinations, such as display units, storage systems, control systems, processors (e.g., processing circuitry 402), network interfaces, peripheral devices, external systems, and/or the like, for further action.

In some embodiments, the input/output circuitry 406, in combination with one or more components described herein (e.g., processing circuitry 402) may be configured to control one or more functions of a display or one or more user interface elements through computer-program instructions (e.g., software and/or firmware) stored on a memory accessible to the processing circuitry 402 (e.g., the memory 404, and/or the like). In some embodiments, aspects of input/output circuitry 406 may be reduced as compared to embodiments where the system 400 may be implemented as an end-user machine or other type of device designed for complex user interactions. In some embodiments (like other components discussed herein), the input/output circuitry 406 may be eliminated from the system 400. Although more than one input/output circuitry can be included in the system 400, only one is shown in FIG. 4 to avoid overcomplicating the disclosure (e.g., as with the other components discussed herein).

The communications circuitry 408, in some embodiments, includes any means, such as a device or circuitry embodied in either hardware, software, firmware or a combination of hardware, software, and/or firmware, that is configured to receive and/or transmit data from/to a network and/or any other device, or circuitry associated therewith. In this regard, the communications circuitry 408 may include, for example, a network interface for enabling communications with a wired or wireless communication network. For example, in some embodiments, communications circuitry 408 may be configured to receive and/or transmit any data that may be stored by the memory 404 using any protocol that may be used for communications between computing devices. For example, the communications circuitry 408 may include one or more network interface cards, antennae, transmitters, receivers, buses, switches, routers, modems, and supporting hardware and/or software, and/or firmware/software, or any other device suitable for enabling communications via a network. Additionally, or alternatively, in some embodiments, the communications circuitry 408 may include circuitry for interacting with the antenna(s) to cause transmission of signals via the antenna(e) or to handle receipt of signals received via the antenna(e). These signals may be transmitted by the system 400 using any of a number of wireless personal area network (PAN) technologies, such as Bluetooth^{®} v1.0 through v5.0, Bluetooth Low Energy (BLE), infrared wireless (e.g., IrDA), ultra-wideband (UWB), induction wireless transmission, or the like. In addition, it should be understood that these signals may be transmitted using Wi-Fi, Near Field Communications (NFC), Worldwide Interoperability for Microwave Access (WiMAX) or other proximity-based communications protocols.

The circuitries of the CPU may be connected through various interconnect architectures, depending on their physical arrangement and implementation within the system 400. Within the CPU 302, different circuitries such as the processing circuitry 402, memory 404, input/output circuitry 406, communications circuitry 408 may be linked through internal buses or interconnect fabrics that facilitate data transfer between these components. For example, the CPU 302 may use an internal crossbar switch or ring bus architecture to interconnect these circuitries, providing a pathway for data to move efficiently between the processing cores, cache memory, and other functional units. In some configurations, the CPU 302 may employ a hierarchical bus structure, where a front-side bus (FSB) connects the processing circuitry 402 to the memory 404, while a separate bus (e.g., a peripheral bus) connects the input/output circuitry 406, and communications circuitry 408. The internal interconnects may also be configured to support coherent memory access, ensuring that changes to data in one part of the CPU are reflected across other connected components.

Accordingly, non-transitory computer readable storage media, which may, for example, be the memory 404, can be configured to store firmware, one or more application programs, and/or other software, which include instructions and/or other computer-readable program code portions that can be executed to direct operation of the system 400 to implement various operations, including the examples described herein. As such, a series of computer-readable program code portions may be embodied in one or more computer-program products and can be used, with a device, system 400, database, and/or other programmable apparatus, to produce the machine-implemented processes discussed herein. It is also noted that all or some of the information discussed herein can be based on data that is received, generated and/or maintained by one or more components of the system 400. In some embodiments, one or more external systems (such as a remote cloud computing and/or data storage system) may also be leveraged to provide at least some of the functionality discussed herein.

The GPU 308 in the system 400 may serve as a specialized processing unit designed to handle parallel computational tasks, such as those involved in graphics rendering, AI, ML, and other data-intensive workloads. The GPU 308 may include various components to support its high-performance capabilities, such as a plurality of multi-processors 414, which may each comprise a set of individual processing units (P_1, P_2, ..., P_i) 422. Each multi-processor 414 may also include its own shared memory 416 to facilitate efficient data access and communication between the processors within the multi-processor. Additionally, the GPU 308 may include device memory 418, which serves as the primary storage for data processed by the GPU, and constant memory 420, which may be used to store read-only data that remains constant throughout the execution of specific tasks.

The multi-processors 414 may be configured to operate in parallel, allowing the GPU 308 to execute multiple threads simultaneously, thereby accelerating tasks that can be divided into smaller, concurrent operations. Each multi-processor 414 may include a set of registers 424 associated with its processors, which provide fast access to frequently used data during computation. The use of shared memory 416 within each multi-processor 414 may help reduce latency and improve throughput by allowing data to be quickly shared between threads without needing to access device memory 418.

The device memory 418 may serve as the main memory resource for the GPU 308 and may include various types of memory, such as GDDR (Graphics Double Data Rate) memory or high-bandwidth memory (HBM), depending on the performance requirements of the system. The device memory 418 may be used to store large datasets, textures, or other information needed for processing tasks, and may be accessible by both the GPU 308 and, in some configurations, the CPU 302. The constant memory 420 may be used for data that does not change during processing, such as configuration parameters or lookup tables, which can be accessed quickly by the processors 422 without incurring additional latency.

The GPU 308 may support various interconnect architectures for communication between the multi-processors 414, shared memory 416, and other components within the system 400. For instance, the GPU 308 may include an internal crossbar switch or ring interconnect that enables data flow between the multi-processors 414, shared memory 416, and device memory 418. In configurations where the GPU 308 is operatively coupled to one or more additional GPUs, high-speed interconnects such as NVLink may be used to facilitate data transfer and sharing of memory resources across multiple GPUs, thus enhancing parallel processing capabilities for large-scale computations.

In some embodiments, the CPU 302 and the GPU 308 may be operatively coupled through various interconnect architectures, depending on their physical arrangement and implementation within the system 400. In embodiments where both the CPU 302 and GPU 308 are integrated onto the same SoC, their circuitries may communicate through high-speed interconnects designed for low latency and high bandwidth. In this configuration, the CPU 302 and GPU 308 can share a unified memory space, allowing them to access common data efficiently without the overhead associated with data transfer between separate components. In embodiments where the CPU 302 and GPU 308 are on different SoCs, their circuitries may connect via PCIe buses or similar high-speed interfaces, allowing for data exchange. In example embodiments of such a scenario, each SoC may have its own dedicated memory, and data may need to be transferred explicitly between the CPU's memory (e.g., memory 404) and the GPU's memory (e.g., device memory 418). Additionally, when CPU 302 and GPU 308 are housed within the same server but on separate motherboards, they may be connected through interconnects such as NVLink^{®} interconnects, which is designed for high-speed communication between CPU(s) and GPU(s), as described above. Such an approach may allow for greater bandwidth compared to traditional PCIe connections and enables faster data sharing, which is particularly beneficial for applications that demand rapid access to large datasets. Overall, the connectivity of the various circuitries within the system 400 can take multiple forms depending on the design choices made during implementation. Each configuration offers different trade-offs in terms of performance, scalability, and complexity, and the chosen architecture may be optimized based on the specific workload requirements and performance goals of the system.

The system 400 may be configured to support a wide range of operations across different domains, depending on the specific implementation requirements and the configuration of its components. For example, the system 400 may be used to perform simulation operations, including but not limited to simulating physical processes, validating software for autonomous machines, or conducting hardware testing in a virtual environment. The system 400's capability to handle parallel processing tasks through the GPU 308 and general-purpose processing through the CPU 302 enables the system 400 to efficiently execute simulations with high computational demands. Additionally, the system 400 may facilitate digital twin operations, where real-world processes are mirrored digitally to monitor, optimize, or predict system behavior.

In embodiments where graphics rendering or light transport simulation is required, such as in virtual reality (VR), augmented reality (AR), or mixed reality (MR) applications, the system 400 may utilize the GPU 308's multi-processors 414 and high-bandwidth memory 418 to render complex visual effects and simulations in real time. The system 400's input/output circuitry 406 may interface with VR/AR/MR display devices to present immersive content to users, while the communications circuitry 408 may support data exchange between the system 400 and external devices or cloud-based services. The parallel computing capabilities of the system 400 may also be employed to accelerate deep learning tasks, such as training or inferencing with neural networks for tasks like object detection, natural language processing, or image recognition.

The system 400 may further support generative AI operations, including the use of large language models (LLMs) for text generation, content creation, and natural language understanding. The processing circuitry 402 may execute algorithms and models designed for generative AI applications, while the GPU 308 may accelerate the computations required for training large-scale models or performing high-dimensional data analysis. The system 400 may also serve as a platform for synthetic data generation, which may be used for model training or testing in environments where real data is limited or unavailable.

In some configurations, the system 400 may be implemented at an edge device, such as a sensor-equipped device in a remote or resource-constrained environment. Alternatively, the system 400 may be deployed in a cloud computing environment, where multiple instances of the system may be interconnected to create a highly scalable and distributed architecture. The system 400 may also support the deployment of Virtual Machines (VMs) to provide isolated environments for running diverse workloads. Furthermore, the collaborative use of the system for 3D content creation platforms may enable multiple users to work on 3D asset development in real time, leveraging the system's high-performance capabilities for rendering and data processing.

Accordingly, the system 400's modular and flexible architecture allows it to support a variety of applications, from traditional computing and data processing to cutting-edge technologies like generative AI, VR/AR, and digital twins. The capabilities of the system may be tailored to specific use cases by selecting appropriate hardware configurations, interconnect architectures, and software frameworks.

### Example End-Point Device Circuitry

FIG. 5 depicts a component-level structure of end-point device 106, in accordance with an embodiment of the disclosure. The end-point device 106 may include a processor 502, memory 504, an input/output component such as a display 506, a communication interface 508, and a transceiver 510, among other components. In certain implementations, the end-point device 106 may also comprise a storage device for additional storage. The components 502, 504, 508, and 510 may be interconnected using various buses, and some of the components may be mounted on a common motherboard or other suitable arrangement.

The processor 502 may be configured to execute instructions within the end-point device 106, including instructions stored in memory 504, which may encompass an application that performs various functions, such as data processing and control operations. The processor 502 may include of a chipset with multiple analog and digital processors. The processor 502 may be used to manage other components of the end-point device 106, including user interface controls, application execution, and wireless communications.

The processor 502 may communicate with the user through a control interface 512 and a display interface 514, which are coupled to the display 506. The display 506 may be implemented using various technologies, such as a Thin-Film-Transistor Liquid Crystal Display (TFT LCD) or an Organic Light Emitting Diode (OLED) display. The display interface 506 may contain circuitry configured to drive the display 506, enabling the display interface 506 to present graphical and other information. The control interface 512 may receive user inputs and convert them into signals for processing by the processor 502. Additionally, an external interface 516 may enable communication with other devices, supporting wired or wireless connections, depending on the implementation.

In specific embodiments, the end-point device 106 may include firmware, an embedded operating system, and/or the like, executed by the processor 502, which supports cryptographic operations described in FIGS. 6, 7, and 8, to ensure the confidentiality, integrity, and security of data transmitted within the virtual network 102A. The processor 502 may manage the execution of various cryptographic functions, including quandle-based cryptographic frameworks, symmetric and asymmetric encryption, digital signature generation, and secure key management. In example embodiments, to optimize performance and enable real-time data protection, the processor 502 may coordinate with dedicated hardware components, such as hardware-accelerated cryptographic functions, a specially configured FPGA, or an ASIC designed for cryptographic tasks.

The processor 502, through the firmware or operating system, may generate, manage, and securely store cryptographic keys used during communication. These keys can include public keys, private keys, session keys, and other essential parameters for secure data handling. The end-point device 106 may support dynamic key management, allowing transitions between different key lengths or types based on the current authentication status or the security requirements of the communication session. For example, a shorter key may be used for initial secure link establishment, with the firmware enabling a transition to a longer key for sustained communication after successful authentication.

Additionally, the processor 502 may integrate the cryptographic operations with other endpoint device 106 components, such as memory 504, to facilitate secure data storage and access. In some configurations, the processor 502 may coordinate with a self-contained cryptographic subsystem that performs encryption and decryption tasks before making the data accessible to other parts of the end-point device 106, ensuring that sensitive information is protected within secure memory regions.

The firmware or operating system managed by the processor 502 may also implement authentication protocols that verify the integrity of transmitted messages and ensure that only authorized entities can access or decrypt the data. Furthermore, the end-point device 106 may incorporate tamper-resistant features to protect against physical attacks, securing cryptographic keys and sensitive data even if hardware components are compromised.

The memory 504 may store data and instructions for use within the end-point device 106. The memory 504 may be implemented as one or more computer-readable media, including volatile or non-volatile memory units. The end-point device 106 may also support expansion memory connected via an expansion interface (not shown), which could include, for example, a memory card interface. This expansion memory may provide additional storage or host applications and other data. In certain embodiments, the expansion memory may include security features or contain instructions to enhance or supplement the functionality of the end-point device 106.

The memory 504 may comprise various types of memory, such as flash memory or NVRAM. In some embodiments, a computer program product may be embodied in an information carrier, which could include memory 504, expansion memory, memory integrated with processor 502, or a signal received via transceiver 510 or external interface 516. This computer program product may contain instructions that, when executed, perform one or more methods described herein.

The end-point device 106 may transmit and receive data or commands through a network connection (e.g., network 104) with a system (e.g., system 400), utilizing communication interface 508. The communication interface 508 may support various communication protocols, such as the Internet Protocol (IP) suite or telecommunications standards, including 2G, 3G, 4G, 5G, and/or the like. Data transmission may occur through transceiver 510, which could be a radiofrequency transceiver supporting long-range and short-range communication methods, such as Bluetooth^{®} or Wi-Fi^{®}. In some configurations, a GPS receiver module 520 may provide location data to the end-point device 106, which can be utilized by applications running on the end-point device 106.

The end-point device 106 may also support audio communication through an audio codec 518, which can process spoken input from a user, converting it into digital data for use by the device. The audio codec 518 may also generate audio output, such as voice communication, recorded sound, or audio generated by applications running on the end-point device 106. This audio output can be delivered through speakers integrated into the device or connected peripherals.

Various implementations of the end-point device 106, including its components and associated techniques, may be realized through combinations of digital electronic circuitry, integrated circuits, specially designed ASICs, computer hardware, firmware, software, or other suitable configurations. The described elements may function independently or in conjunction with one another to support the operations and functionalities of the end-point device 106 as detailed herein.

### Example Method for Direct Authentication between Two Entities in a Virtual Environment

FIG. 6 illustrates an example method 600 for direct authentication between two entities in a virtual environment, in accordance with an embodiment of the disclosure. At block 602, the first entity, which may correspond to an end-point device 106, transmits an access request to the second entity, which may be another end-point device or server within the virtual network 102A. The access request may be a request to access a resource associated with the second entity, such as data, services, and/or a shared system within or outside the virtual environment. The first entity may initiate the access request over the network 104, via secure communication interfaces. The access request may include initial information such as session identifiers, access tokens, or other non-sensitive metadata, which provides context for the requested interaction.

At block 604, in response to the access request, the second entity transmits an authentication request to the first entity. The authentication request may serve to verify the identity and/or legitimacy of the first entity before granting access to the requested resource. The nature of the authentication credentials requested by the second entity may vary depending on the specific resource the first entity seeks to access. For instance, accessing different resources may require varying levels of credentials, such as user IDs, digital certificates, or specific access tokens. The second entity may use standard authentication protocols, such as challenge-response mechanisms or certificate-based authentication, to issue the request. The authentication request may include specific parameters, such as a nonce or timestamp, to prevent replay attacks and ensure the security of the authentication process. The second entity may also use the network 104 to communicate the authentication request.

At block 606, the first entity encrypts primary information (pi) using quandle-based cryptographic framework. In some embodiments, the authentication credential may include both primary information and supplementary information. The primary information (pi) may include sensitive data, such as personally identifiable information (PII), financial details, or authentication tokens that verify the identity of the first entity. Supplementary information may include secondary identification information, session identification information, authentication tokens, payment tokens, or entity status information. In specific embodiments, supplementary information may include contextual or transactional data necessary for the interaction, such as identifying the specific session, validating the authenticity of the request, or confirming the status of the first entity, without exposing the primary information. For instance, session identification information may help the second entity recognize ongoing interactions, while authentication tokens may validate the integrity of the communication. Payment tokens can confirm the transactional intent without revealing underlying financial details, and entity status information can provide real-time verification of the first entity's current access rights or permissions. The goal in these scenarios is to securely encrypt the primary information and transmit the authentication credential with the encrypted primary information and supplementary information.

In one aspect, the first entity may identify the specific part of the authentication credential that is actually required to obtain access. If this specific part is included within the primary information, the first entity may extract only this specific part and encrypt the remaining primary information within the authentication credential. The first entity may then transmit the authentication credential with the encrypted primary information, the specific extracted portion, and the supplementary information. In some cases, instead of extracting the specific portion as is, the first entity may extract a modified version of the specific portion such that it is not identical to the actual part, but still sufficient to satisfy the authentication request. In another aspect, the first entity may choose to encrypt all primary information within the authentication credential and then transmit the authentication credential with the fully encrypted primary information and supplementary information.

The nature, type, and structure of the data may inform the encryption approach, as different types of data may require specific handling. The nature of the primary information (pi) can vary widely depending on its intended use and the context in which it is being communicated. For example, the primary information (pi) may be textual data, such as messages, emails, documents, and/or the like; numerical data, such as financial information, scientific data, and/or the like; and/or multimedia data, such as images, audio, and video files, and/or the like. Similarly, the structure of the primary information (pi) may also depend on its intended use and context. For example, the primary information (pi) may be linear text, where the data is a sequence of characters or numbers, often with a defined beginning and an end; structured data, where the data adheres to a specific format or schema, such as JavaScript Object Notation (JSON), Extensible Markup Language (XML), or Comma Separated Values (CSV) files, where the arrangement of the data conveys meaning; or unstructured data, where the information does not have a pre-defined data model.

Due to the diverse nature of the primary information (pi), prior to being encrypted, the primary information (pi) may be transformed into a uniform format that the encryption algorithm can efficiently process, ensuring that the intrinsic characteristics of the original data-regardless of its type and/or structure-are preserved and translated into a numerical or binary format. Such a transformation may be governed by specific encoding standards, which dictate how different types of data are represented numerically. For example, the primary information (pi) may be transformed using American Standard Code for Information Interchange (ASCII), Unicode, binary encoding, hexadecimal encoding, and/or the like. By standardizing the representation of various data types, the transformation ensures that encryption algorithms can apply their mathematical transformations uniformly, regardless of the original data's nature. As such, regardless of the initial form of the primary information (pi), the primary information (pi) can be transformed into either an integer format, non-integer format, rational numbers, and/or the like to comply with the operational requirements of the cryptographic algorithm described herein.

The first entity may encrypt the first information (pi) associated with the authentication credential to generate the encrypted primary information (epi). The encryption process may use a quandle-based cryptographic framework, which applies the mathematical properties of a quandle to ensure secure and reversible encryption, as described herein. As described herein, the first entity may encrypt all primary information (pi) or encrypt all primary information (pi) while excluding the specific portion that is required for the authentication credential. Specifically, the encrypted primary information (epi) may be generated based on the primary information (pi), an encoding variable (y), and/or the first public key (e1).

The first public key (e1) may refer to a portion of the public-private key pair that can be shared openly without compromising the security of the cryptographic system. In an example embodiment, the first public key (e1) may be generated by the intended recipient (e.g., the second entity) and communicated to the transmitting party (e.g., the first entity). As such, the first public key (e1) may be used by anyone to encrypt data. Alternatively, or additionally, the first public key (e1) may be generated by the transmitting party and transmitted to the intended recipient along with the ciphertext (e.g., encrypted primary information (epi)) for verification purposes. The first public key (e1) may be a large prime number or have a large prime factor. For example, the first public key (e1) may satisfy the condition 1 < e1 < ϕ(n), where ϕ(n) is Euler's totient function. Here, ϕ(n) = ϕ(p · q) = (p - 1) · (q - 1). Furthermore, e1 may be coprime to ϕ(n), ensuring that e1 has an inverse modulo ϕ(n), a necessary condition for the corresponding first private key (f1) to exist, where f1 is the number that satisfies the equation e1 · f1 = 1 mod ϕ(n). In other words, e1 is chosen such that the product of e1 and f1, when divided by ϕ(n), leaves a remainder of 1. Alternatively or additionally, the first public key (e1) may satisfy the condition 1 < e1 < λ(n), where λ(n) is a Carmichael's totient function. Here, λ(n) = λ(p · q) = lcm(p - 1, q - 1), where lcm is least common multiple. Similarly, e1 may be coprime to λ(n), ensuring that e1 has an inverse modulo λ(n), a necessary condition for the corresponding first private key (f1) to exist, where f1 is the number that satisfies the equation e1 · f1 = 1 mod λ(n).

The encoding variable (y) may be a parameter used in the encryption process to modify the primary information (pi) prior to or during the encryption operation. In example embodiments, similar to the first public key (e1), the encoding variable (y) may also be generated by an intended recipient and communicated to the transmitter. Alternatively, or additionally, the encoding variable (y) may be generated by the transmitting party and transmitted to the intended recipient along with the public key (e1) and ciphertext (c) for digital signature verification purposes. Alternatively or additionally, the encoding variable (y) may not be publicly communicated between the parties and may instead be communicated via a secure key distribution protocol, such as quantum key distribution (QKD). The encoding variable (y) may be a constant, a randomly generated number, a value derived from some aspect of the encryption scheme, and/or the like. The encoding variable (y) may add a layer of complexity to the encryption process, making the resulting encrypted primary information (epi) more secure. As such, in the encryption algorithm described herein, the encoding variable (y) may be a rational number that is not equal to 1.

To encrypt the primary information (pi), the first entity may employ a binary operation, ▷, that satisfies the axioms of a quandle. Specifically, the encrypted primary information (epi) = pi ▷ y, and $pi ⊳ y = y {\left(\frac{pi}{y}\right)}^{e 1}$. In an example embodiment, the primary information (pi) may satisfy the condition 0 ≤ pi ≤ n - 1, where n is a composite number of the form, n = p · q, and p and q are prime numbers. The choice of n as a product of two prime numbers underpins the security of the encryption algorithm. The difficulty of factoring n back into its prime components without prior knowledge of p and q makes it computationally difficult for unauthorized parties to decrypt the primary information without access to the corresponding first private key (f1).

At block 608, the first entity transmits the encrypted primary information and supplementary information to the second entity. The supplementary information (s) accompanying the encrypted primary information may serve as additional data that supports the interaction between the entities without revealing sensitive details. At block 610, the second entity authenticates the first entity based on the encrypted primary information and supplementary information. The second entity may use the supplementary information to validate the identity and legitimacy of the first entity. The supplementary information provides essential context that helps confirm the authenticity of the communication, such as verifying the session or transaction details and ensuring that the data aligns with the expected parameters of the authentication request. In embodiments where the first entity has extracted a specific portion of the primary information relevant to the authentication credential, the second entity may also use this extracted portion in the authentication process. This specific portion, whether it is an unmodified or modified version, provides an additional layer of verification, helping the second entity determine whether the first entity meets the necessary criteria for access. In some embodiments, the first entity may only transmit the supplementary information, while retaining the encrypted primary information.

If the authentication is successful, at block 612, the second entity authenticates the first entity based on the encrypted primary information and supplementary information. In this regard, the second entity may confirm that the encrypted data and associated supplementary information meet the security and integrity criteria necessary for authorization. Upon authenticating the first entity, at block 616, the second entity grants access to the resource. On the other hand, if the authentication is not successful, at block 614, the second entity denies access and notifies the first entity.

The described secure authentication and authorization process allowing the first entity to interact with the second entity in a virtual environment without compromising sensitive information can be adapted to various use cases, including financial transactions, identity verification, and product authenticity checks, to enhance security and protect privacy.

In an example embodiment, the first entity, such as a User, may initiate a transaction with the second entity, such as a Vendor, by transmitting an access request to access payment services. The access request may include session identifiers or payment initiation data over the network, providing context for the requested interaction. In response, the second entity may send an authentication request to the first entity, specifying the required credentials for transaction verification, such as a payment token. The authentication credential may contain both primary information, such as sensitive financial data (e.g., credit card numbers or account details), and supplementary information, such as transaction IDs or session identifiers. If the first entity were to transmit the authentication credential without modification, it could risk exposing the sensitive primary information.

To mitigate this risk, before transmitting the authentication credential to the second entity, the first entity may encrypt the primary information using quandle-based encryption, ensuring that sensitive financial data remains protected. The first entity may then transmit the authentication credential to the second entity with the primary information encrypted and the supplementary information remaining in its original form. In some cases, the first entity may choose to transmit only the supplementary information while retaining the encrypted primary information, thereby allowing the second entity to authenticate the transaction based solely on the supplementary data. The second entity can then authenticate the transaction by validating the supplementary information and confirming the encrypted primary information without accessing the unencrypted sensitive data. Upon successful authentication, the second entity may authorize the transaction, allowing the process to proceed securely without compromising the User's financial details.

In another example embodiment, the first entity, such as a User, may seek to access a secure service managed by the second entity, such as an online platform. The first entity may initiate the process by transmitting an access request that includes session identifiers or non-sensitive metadata to establish the context of the request. In response, the second entity sends an authentication request specifying the required credentials, such as a digital certificate or authentication token, necessary to verify the User's identity. The authentication credential may contain both primary information, such as personally identifiable information (PII) like the User's name, ID number, or address, and supplementary information, such as session tokens or status flags.

Directly transmitting the authentication credential could expose sensitive primary information, risking the User's privacy. To protect this information, before transmitting the authentication credential to the second entity, the first entity may encrypt the primary information using quandle-based encryption. The first entity may then transmit the authentication credential with the primary information encrypted and the supplementary information left unencrypted. In some cases, the first entity may opt to transmit only the supplementary information while retaining the encrypted primary information, allowing the second entity to perform authentication based on the non-sensitive supplementary data alone. The second entity can validate the supplementary data and confirm the encrypted primary information without needing direct access to the User's unencrypted identity details. Upon successful authentication, the second entity may grant the User access to the secure service, maintaining the confidentiality of the User's sensitive information.

In an example embodiment, the first entity, such as a Buyer, may seek to verify the authenticity of a product using a service provided by the second entity, such as a Verification Service. The first entity may initiate the process by transmitting an access request that includes basic information such as session IDs or product details to start the verification process. In response, the second entity may transmit an authentication request specifying the necessary verification credentials, such as a digital signature or product certificate, required to validate the product's authenticity. The authentication credential may contain both primary information, such as proprietary product details, unique identifiers, or manufacturing data, and supplementary information, such as batch numbers, transaction timestamps, or verification tokens.

Transmitting the authentication credential as is could risk exposing sensitive product details or proprietary data. To protect this information, the first entity may encrypt the primary information using quandle-based encryption before transmitting the authentication credential to the second entity. The first entity may then send the authentication credential with the encrypted primary information and unencrypted supplementary information. In some cases, the first entity may choose to transmit only the supplementary information, such as the batch number or verification token, while retaining the encrypted primary information. This allows the second entity to validate the authenticity of the product based on the non-sensitive supplementary data without direct access to the sensitive primary information. Upon successful verification, the second entity can confirm the product's authenticity to the first entity without requiring unencrypted access to proprietary or sensitive details.

### Example Method for Third-Party Mediated Authentication in a Virtual Environment

FIG. 7 illustrates an example method 700 for third-party mediated authentication in a virtual environment, in accordance with an embodiment of the disclosure. In secure access control systems, involving a third-party verification entity can improve security and privacy during authentication processes. A third-party may act as an independent verifier, such that sensitive information is handled securely without being directly exposed to other involved entities. Such an approach may allow the first entity, seeking access to a resource, to securely transmit encrypted data to the third party for verification, rather than directly to the second entity managing the resource. By employing quandle-based cryptographic framework, the third party can verify the legitimacy of the first entity's credentials or other primary information without disclosing sensitive data to the second entity.

At block 702, the first entity transmits access request to the second entity. The first entity may transmit an access request to the second entity to gain access to a specific resource, such as data, services, or a restricted area within a system. The access request may include the first entity's public key, first public key (e1).

At block 704, the second entity transmits authentication request to the first entity in response to the access request. Upon receiving the access request, the second entity sends an authentication request back to the first entity. The authentication request may include the specific criteria that the first entity must meet to gain access to the resource, such as credentials, permissions, verification of identity, and/or the like. The authentication request may include the second entity's public key, second public key (e2).

At block 706, the first entity encrypts the primary information using quandle-based cryptographic framework. In response to the authentication request, the first entity may encrypt its primary information-such as identity credentials, access tokens, or verification data-using a quandle-based cryptographic framework, as described in FIG. 6. The encryption may use the third entity's public key (e3), such that the sensitive information can only be decrypted and processed by the third entity. The encryption may maintain the confidentiality of the primary information, protecting it from unauthorized access during subsequent transmissions.

At block 708, the first entity transmits encrypted primary information and supplementary information to third entity. After encrypting the primary information, the first entity may transmit the encrypted data along with the supplementary information to the third entity. The secure transmission may be carried out over a communication link established through prior encryption handshakes. The supplementary information may assist the third entity in validating the request and confirming that it aligns with the authentication criteria specified by the second entity.

At block 710, the third entity authenticates the first entity based on the encrypted primary information and supplementary information. Upon receiving the encrypted primary information and supplementary information, the third entity may use a corresponding private key (f3) to decrypt the primary information and authenticate the first entity. The private key (f3) may refer to a component of the key pair used for decryption.

As described herein, the encryption algorithm may be an asymmetric cryptographic system that employs a pair of keys: a public key (e3) for encryption and a private key (f3) for decryption. In an example embodiment, an intended recipient (e.g., third entity) may generate the public-private key pair that is to be used in the encryption-decryption process. To generate the private key (f3), any intended recipient (e.g., third entity) may select two distinct (typically) large prime numbers, p and q. The size of the prime numbers chosen may inform the security of the encryption algorithm. Once p and q are chosen, the third entity may be configured to determine the modulus n by multiplying p and q. This modulus is used in both the public key (e3) and the private key (f3). Subsequently, the decoder may be configured to determine an Euler's Totient function, ϕ(n) = ϕ(p · q) = (p - 1) · (q - 1), which represents the count of numbers less than n that are coprime to n. Then the third entity may choose a public key (e3) such that 1 < e < ϕ(n), and e is coprime to ϕ(n). Subsequently, the third entity may be configured to calculate the private key (f3) as the modulo multiplicative inverse of e modulo ϕ(n), satisfying the equation, e3 · f3 = 1 mod ϕ(n), meaning that f3 is a number that, when multiplied by e3 ϕ(n), yields 1. Upon generating the public-private key pair, the third entity may be configured to communicate the public key (e3) to the transmitting entities (e.g., first entity and second entity) during the prior encryption key distribution process. Similarly, the third entity may also generate the encoding variable (y). In this regard, the third entity may generate the encoding variable (y) as a constant, a randomly generated number, a value derived from some aspect of the encryption scheme, and/or the like, and may transmit the encoding variable (y) to the transmitting entities.

The third entity may generate a deciphered form (pi') of a primary information (pi) based on the encrypted primary information (epi), the encoding variable (y), and the private key (f3), wherein pi' = epi ◁ y. Here, ◁ is a binary operation that satisfies the axioms of quandle and/or rack, and $epi ◁ y = y {\left(\frac{epi}{y}\right)}^{f 3}$. This operation transforms the encrypted primary information (epi) into a deciphered form (pi') of the primary information (pi).

Using the deciphered form (pi') of the primary information (pi), the third entity may evaluate whether the information meets the criteria required for access, such as validating credentials, verifying permissions, or confirming compliance with security standards. The supplementary information, such as timestamps, may help determine that the request is processed within a secure timeframe, preventing unauthorized reuse of valid requests.

If the authentication is successful, at block 712, the third entity authorizes the second entity to provide the first entity access to the resource. In this regard, the third entity may confirm that the primary information and associated supplementary information associated with the first entity meet the security and integrity criteria necessary (or as set up by the second entity) for authorization. Upon receiving authorization from the third entity, at block 616, the second entity grants the first entity access to the resource. On the other hand, if the authentication is not successful, at block 714, the third entity denies authorization for the second entity to provide the first entity access, and subsequently notifies the first entity as such.

In various secure communication systems, particularly those involving sensitive or restricted resources, the interaction between entities often requires a structured process of authentication and authorization. Such a process can involve multiple parties, including an initial requestor (first entity), a resource provider (second entity), and sometimes a neutral third-party verifier (third entity). The steps outlined in the preceding blocks generally depict a sequence where the first entity seeks access to a resource, prompting a series of encrypted exchanges designed to authenticate and authorize that access while maintaining data security. These steps leverage quandle-based cryptographic framework techniques, which allow for secure data handling without exposing sensitive information directly between the entities involved.

An illustrative example of this process is an age verification scenario for accessing age-restricted content, such as a PG-13 event. In this scenario, the first entity (User) may initiate an access request to the second entity (Vendor), prompting a structured exchange that includes encrypted communications and third-party verification to ensure compliance with the age restriction criteria. This example highlights how secure interactions can be managed within virtual environments, using quandle-based cryptographic framework to safeguard sensitive information such as personal age data while enabling the Vendor to confirm eligibility without direct access to the underlying details. The following steps detail this age verification process, demonstrating the practical application of the secure, multi-party communication framework described above.

In specific embodiments, before any age verification or other secure interaction begins, the Third Party's public key may be securely distributed to both the User and the Vendor. The key distribution allows the User and Vendor to encrypt sensitive communications intended solely for the Third Party, ensuring that only the Third Party, with its corresponding private key, can decrypt and process the data. The distribution of the Third Party's public key can occur through secure methods such as trusted direct provisioning, public key infrastructure (PKI), key distribution centers (KDC), out-of-band communication, and/or the like. Once obtained, these public keys can be cached on the User's and Vendor's systems for future interactions, though periodic updates and verifications are necessary to maintain security and prevent key compromise.

The process may begin when the first entity (User) sends an access request to the second entity (Vendor) to participate in an age-restricted event, such as a PG-13 event. This access request may include the User's public key (first public key, e1). Upon receiving the access request, the second entity (Vendor) may send an authentication request back to the first entity (User), specifying the required age verification criteria (e.g., age > 13) and including the Vendor's public key (second public key, e2). By exchanging public keys, the User and Vendor can authenticate each other's identities. The User can verify that they are communicating with the legitimate Vendor, and the Vendor can confirm the authenticity of the User. In specific embodiments, exchanging public keys allows the User and the Vendor to establish a secure communication channel, such that all subsequent communications between them are encrypted and protected from unauthorized access. The exchanged public keys can also play a role in coordinating the verification process with the Third Party. For example, when the Vendor sends the age verification request to the Third Party, it may include the User's public key. This inclusion helps the Third Party associate the correct keys and credentials with each entity involved, ensuring that the verification process proceeds smoothly and securely.

Following these initial exchanges, two quandle-based cryptographic framework handshakes may be performed: one between the second entity (Vendor) and the third entity (Verification Third Party), and another between the first entity (User) and the third entity (Verification Third Party). These handshakes establish secure communication links between the involved parties, such that subsequent data exchanges may be protected against unauthorized access and tampering. To securely transmit sensitive information such as age-related data, the first entity (User) may encrypt the message using the Third Party's public key. This encryption process ensures that only the Third Party, who holds the corresponding private key, can decrypt and access the contents of the message. As described herein, the encryption may be performed using quandle-based cryptographic framework methods, leveraging the Third Party's public key, which the User has obtained securely through pre-interaction key distribution channels. Along with the age information, the User may include supplementary data, such as a timestamp, to allow the message is processed within a specific timeframe, further improving security by preventing replay attacks.

Concurrently, the second entity (Vendor) may send an encrypted age verification request to the third entity (Verification Third Party). The age verification request may include the Vendor's public key (e2), the User's public key (e1), and the specified age verification criteria. The request may be encrypted using the Third Party's public key, which the User has obtained securely through pre-interaction key distribution channels. The third entity (Verification Third Party) may then verify the User's age information based on the encrypted inputs from both the User and the Vendor. Upon successful verification, the third entity may send a confirmation to the second entity (Vendor) indicating whether the age verification criteria have been met. The confirmation may include only the verification result (e.g., "yes" or "no") without disclosing the User's actual age.

Following receipt of the confirmation, the second entity (Vendor) may authorize the first entity (User) access by sending an entry ticket to the first entity (User). Throughout this process, no sensitive information beyond the final verification outcome and public keys is exchanged between the entities. The use of quandle-based cryptographic framework ensures that the verification process is secure, allowing the Vendor to verify the User's eligibility without accessing sensitive data directly, thereby protecting privacy and maintaining data security.

### Example Method for Continued Secure Communication between Entities in a Virtual Environment

FIG. 8 illustrates an example method 800 for continued secure communication between entities in virtual environments, in accordance with an embodiment of the disclosure. At block 802, the first entity establishes an initial communication link with the second entity. The initial communication link may be used to facilitate the first interaction between the two entities and provides a secure channel for the first entity to transmit data necessary for the authentication process. As such, the initial communication link may serve primarily to allow the first entity to request access to a resource managed by the second entity. The initial communication link may be temporary and may be based on a short key associated with the first entity's public key. In specific embodiments, the short key may have a key length that may be less than or equal to 1024 bits, allowing for a balance between security and efficiency during the early stages of communication.

At block 804, the first entity transmits encrypted primary information and supplementary information via the initial communication link. At block 806, the second entity receives the encrypted primary information and supplementary information, and authenticates the first entity. The authentication process may be same or similar to the authentication process described in FIGS. 6 and 7, and throughout herein.

If the authentication is successful, at block 808, the first entity transitions to a sustained communication link for continued communication with the second entity. Such a transition may involve establishing a more secure and long-term channel for continued interactions, using a longer encryption key than was used during the initial communication link. In specific embodiments, the long key may have a key length that may be equal to or greater than 2048 bits. The sustained communication link may establish a higher level of security and is used for all future communications between the entities as long as the authentication remains valid. The use of the sustained communication link may protect sensitive data during extended interactions and ensures that subsequent transmissions remain secure throughout the session.

On the other hand, if the authentication is unsuccessful, at block 810, the first entity does not transition to the sustained communication link. In this case, the second entity may deny access and notify the first entity that authentication has failed. No further communication occurs, and access to the requested resource may be blocked.

It should be noted that the terms "short key" and "long key" as used herein are relative and may evolve over time as encryption standards and computational capabilities advance. In the present disclosure, a short key may refer to a key length that provides a balance between security and efficiency for initial communication links. Similarly, a long key may refer to a key length that ensures enhanced security for sustained communication links. However, as technology progresses and computational power increases, the definitions of short and long keys may shift to accommodate higher levels of security. For example, what is currently considered a long key may become a short key in future implementations as encryption requirements grow more stringent. Thus, the use of specific key lengths in this disclosure is intended to be illustrative and not limiting, and the key lengths for short and long keys may vary depending on future developments in encryption technology and security standards.

Many modifications and other embodiments of the present disclosure set forth herein will come to mind to one skilled in the art to which these embodiments pertain having the benefit of the teachings presented in the foregoing descriptions and the associated drawings. Although the figures only show certain components of the methods and systems described herein, it is understood that various other components may also be part of the disclosures herein. In addition, the method described above may include fewer steps in some cases, while in other cases the method may include additional steps. The steps and modifications to the steps of the method described above, in some cases, may be performed in any order and in any combination.

Therefore, it is to be understood that the present disclosure is not to be limited to the specific embodiments disclosed and that modifications and other embodiments are intended to be included within the scope of the appended claims. Although specific terms are employed herein, they are used in a generic and descriptive sense only and not for purposes of limitation.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:
Clause 1. A system for secure quandle-based cryptographic framework in virtual environments, the system comprising:
   a first entity configured to operate within a virtual environment;
   a second entity configured to operate within the virtual environment;
   wherein the first entity is configured to:
      receive, from the second entity, an authentication request to allow access to a resource associated with the second entity;
      encrypt, using a quandle-based cryptographic framework, primary information (pi) associated with the first entity using a first public key (e1), wherein the first public key (e1) is associated with the first entity;
      transmit the encrypted primary information (epi) and supplementary information (s) associated with the first entity to the second entity in response to the authentication request, and
   wherein the second entity is configured to:
      authenticate the first entity based on the encrypted primary information (epi) and the supplementary information (s); and
      authorize the first entity to access the resource in response to successful authentication of the first entity.
Clause 2. The system of Clause 1, wherein:
   the first entity is further configured to transmit an access request to the second entity, wherein the access request comprises a request to access the resource, and
   the second entity is configured to transmit the authentication request to the first entity in response to receiving the access request.
Clause 3. The system of Clause 1, wherein the first entity is further configured to:
   generate the encrypted primary information (epi) based on the primary information (pi), an encoding variable (y), and the first public key (e1), wherein epi = pi ▷ y, wherein ▷ is a binary operation that satisfy axioms of a quandle.
Clause 4. The system of Clause 3, wherein 0 ≤ pi ≤ n - 1, wherein n is a composite number of the form, n = p · q, and wherein p and q are prime numbers.
Clause 5. The system of Clause 4, wherein $pi ▷ y = y {\left(\frac{pi}{y}\right)}^{e 1}$, wherein 1 < e1 < ϕ(n), wherein ϕ(n) is Euler's totient function, and wherein ϕ(n) = ϕ(p · q) = (p - 1) · (q - 1).
Clause 6. The system of Clause 1, wherein the first entity is further configured to:
   establish an initial communication link with the second entity, and wherein transmitting the encrypted primary information (epi) comprises using the initial communication link.
Clause 7. The system of Clause 6, wherein the first public key (e1) is a short key having a length that is less than or equal to 1024 bits.
Clause 8. The system of Clause 6, wherein the first entity is configured to:
   transition from the initial communication link to a sustained communication link upon successful authorization of the first entity to access the resource.
Clause 9. The system of Clause 8, wherein transitioning from the initial communication link to the sustained communication link further comprises transitioning the first public key (e1) from the short key to a long key having a length that is greater than or equal to 2048 bits.
Clause 10. The system of Clause 1, wherein the primary information (pi) comprises at least one of financial information, Personally Identifiable Information (PII), or internal system information.
Clause 11. The system of Clause 1, wherein the supplementary information (s) comprises at least one of session identification information, authentication token information, payment token information, or entity status information.
Clause 12. A method for secure quandle-based cryptographic framework in virtual environments, the method comprising:
   receiving, at a first entity, an authentication request from a second entity to allow access to a resource associated with the second entity;
   encrypting, using a quandle-based cryptographic framework, primary information (pi) associated with the first entity using a first public key (e1), wherein the first public key (e1) is associated with the first entity; and
   transmitting the encrypted primary information (epi) and supplementary information (s) associated with the first entity to the second entity in response to the authentication request,
   wherein the second entity is configured to authenticate the first entity based on the encrypted primary information (epi) and the supplementary information (s), and
   wherein the first entity and the second entity are configured to operate within a virtual environment.
Clause 13. The method of Clause 12, wherein:
   the first entity is further configured to transmit an access request to the second entity, wherein the access request comprises a request to access the resource, and
   the second entity is configured to transmit the authentication request to the first entity in response to receiving the access request.
Clause 14. The method of Clause 12, wherein the method further comprises:
   generating the encrypted primary information (epi) based on the primary information (pi), an encoding variable (y), and the first public key (e1), wherein epi = pi ▷ y, wherein ▷ is a binary operation that satisfy axioms of a quandle.
Clause 15. The method of Clause 14, wherein 0 ≤ pi ≤ n - 1, wherein n is a composite number of the form, n = p · q, and wherein p and q are prime numbers.
Clause 16. The method of Clause 15, wherein $pi ▷ y = y {\left(\frac{pi}{y}\right)}^{e 1}$, wherein 1 < e1 < ϕ(n), wherein ϕ(n) is Euler's totient function, and wherein ϕ(n) = ϕ(p · q) = (p - 1) · (q - 1).
Clause 17. A system for secure quandle-based cryptographic framework in virtual environments, the system comprising:
   a first entity configured to operate within a virtual environment;
   a second entity configured to operate within the virtual environment; and
   a third entity configured to provide authentication;
   wherein the first entity is configured to:
      receive, from the second entity, an authentication request to allow access to a resource associated with the second entity, wherein the authentication request comprises a second public key (e2) associated with the second entity;
      encrypt, using a quandle-based cryptographic framework, information (i) associated with the first entity using a third public key (e3), wherein the third public key (e3) is associated with the third entity; and
      transmit, to the third entity, the encrypted information (ei) and the second public key (e2),
   wherein the third entity is configured to:
      authenticate the first entity based on the authentication request and the encrypted information (ei); and
      authorize the second entity to provide the first entity with access to the resource.
Clause 18. The system of Clause 17, wherein:
   the first entity is further configured to transmit an access request to the second entity, wherein the access request comprises a request to access the resource and a first public key (e1) associated with the first entity, and
   the second entity is further configured to transmit, to the third entity, the authentication request, the first public key (e1), and the second public key (e2).
Clause 19. The system of Clause 17, wherein the second entity is further configured to:
   provide the first entity with access to the resource in response to receiving the authorization from the third entity.
Clause 20. The system of Clause 18, wherein the first entity is further configured to:
   generate the encrypted information (ei) based on the information (i), an encoding variable (y), and the third public key (e3), wherein ei = i ▷ y, wherein ▷ is a binary operation that satisfy axioms of a quandle.
Clause 21. The system of Clause 20, wherein, in authenticating the first entity, the third entity is further configured to:
   generate a deciphered form (i') of the information (i) based on the encrypted information (ei), a third private key (f3) corresponding to the third public key (e3), and the encoding variable (y) to, wherein i' = ei ◁ y, and wherein ◁ is a binary operation that satisfy axioms of a quandle; and
   determine that the deciphered form (i') of the information (i) satisfies the authentication request.
Clause 22. The system of Clause 17, wherein the third entity is configured to operate within the virtual environment.
Clause 23. The system of Clause 17, wherein the third entity is configured to operate outside the virtual environment.
Clause 24. A method for secure quandle-based cryptographic framework in virtual environments, the method comprising:
   receiving, from a second entity, an authentication request to allow access to a resource associated with the second entity, wherein the authentication request comprises a second public key (e2) associated with the second entity;
   encrypting, using a quandle-based cryptographic framework, information (i) associated with the first entity using a third public key (e3), wherein the third public key (e3) is associated with a third entity; and
   transmitting, to the third entity, the encrypted information (ei) and the second public key (sk),
   wherein the third entity is configured to authenticate the first entity based on the authentication request and the encrypted information (ei).
Clause 25. The method of Clause 24, wherein the method further comprises:
   generating the encrypted information (ei) based on the information (i), an encoding variable (y), and the third public key (e3), wherein ei = i ▷ y, wherein ▷ is a binary operation that satisfy axioms of a quandle.
Clause 26. The method of Clause 25, wherein authenticating the first entity further comprises:
   generating a deciphered form (i') of the information (i) based on the encrypted information (ei), a third private key (f3) corresponding to the third public key (e3), and the encoding variable (y) to, wherein i' = ei ◁ y, and wherein ◁ is a binary operation that satisfy axioms of a quandle; and
   determining that the deciphered form (i') of the information (i) satisfies the authentication request.

## Claims

1. A system for secure quandle-based cryptographic framework in virtual environments, the system comprising:
a first entity configured to operate within a virtual environment;
a second entity configured to operate within the virtual environment;
wherein the first entity is configured to:
receive, from the second entity, an authentication request to allow access to a resource associated with the second entity;
encrypt, using a quandle-based cryptographic framework, primary information (pi) associated with the first entity using a first public key (e1), wherein the first public key (e1) is associated with the first entity;
transmit the encrypted primary information (epi) and supplementary information (s) associated with the first entity to the second entity in response to the authentication request, and
wherein the second entity is configured to:
authenticate the first entity based on the encrypted primary information (epi) and the supplementary information (s); and
authorize the first entity to access the resource in response to successful authentication of the first entity.

2. The system of Claim 1, wherein:
the first entity is further configured to transmit an access request to the second entity, wherein the access request comprises a request to access the resource, and
the second entity is configured to transmit the authentication request to the first entity in response to receiving the access request.

3. The system of Claim 1 or 2, wherein the first entity is further configured to:
generate the encrypted primary information (epi) based on the primary information (pi), an encoding variable (y), and the first public key (e1), wherein epi = pi ▷ y, wherein ▷ is a binary operation that satisfy axioms of a quandle, wherein 0 ≤ pi ≤ n - 1, wherein n is a composite number of the form, n = p · q, and wherein p and q are prime numbers, wherein pi ▷ $y = y {\left(\frac{pi}{y}\right)}^{e 1}$, wherein 1 < e1 < ϕ(n), wherein ϕ(n) is Euler's totient function, and wherein ϕ(n) = ϕ(p · q) = (p - 1) · (q - 1).

4. The system of Claim 1, 2, or 3, wherein the first entity is further configured to:
establish an initial communication link with the second entity, and wherein transmitting the encrypted primary information (epi) comprises using the initial communication link.

5. The system of Claim 4, wherein the first public key (e1) is a short key having a length that is less than or equal to 1024 bits.

6. The system of Claim 4, wherein the first entity is configured to:
transition from the initial communication link to a sustained communication link upon successful authorization of the first entity to access the resource, wherein transitioning from the initial communication link to the sustained communication link further comprises transitioning the first public key (e1) from the short key to a long key having a length that is greater than or equal to 2048 bits.

7. The system of any preceding Claim, wherein the primary information (pi) comprises at least one of financial information, Personally Identifiable Information (PII), or internal system information.

8. The system of any preceding Claim, wherein the supplementary information (s) comprises at least one of session identification information, authentication token information, payment token information, or entity status information.

9. A method for secure quandle-based cryptographic framework in virtual environments, the method comprising:
receiving, at a first entity, an authentication request from a second entity to allow access to a resource associated with the second entity;
encrypting, using a quandle-based cryptographic framework, primary information (pi) associated with the first entity using a first public key (e1), wherein the first public key (e1) is associated with the first entity; and
transmitting the encrypted primary information (epi) and supplementary information (s) associated with the first entity to the second entity in response to the authentication request,
wherein the second entity is configured to authenticate the first entity based on the encrypted primary information (epi) and the supplementary information (s), and
wherein the first entity and the second entity are configured to operate within a virtual environment.

10. A system for secure quandle-based cryptographic framework in virtual environments, the system comprising:
a first entity configured to operate within a virtual environment;
a second entity configured to operate within the virtual environment; and
a third entity configured to provide authentication;
wherein the first entity is configured to:
receive, from the second entity, an authentication request to allow access to a resource associated with the second entity, wherein the authentication request comprises a second public key (e2) associated with the second entity;
encrypt, using a quandle-based cryptographic framework, information (i) associated with the first entity using a third public key (e3), wherein the third public key (e3) is associated with the third entity; and
transmit, to the third entity, the encrypted information (ei) and the second public key (e2),
wherein the third entity is configured to:
authenticate the first entity based on the authentication request and the encrypted information (ei); and
authorize the second entity to provide the first entity with access to the resource.

11. The system of Claim 10, wherein:
the first entity is further configured to transmit an access request to the second entity, wherein the access request comprises a request to access the resource and a first public key (e1) associated with the first entity, and
the second entity is further configured to transmit, to the third entity, the authentication request, the first public key (e1), and the second public key (e2).

12. The system of Claim 10 or 11, wherein the second entity is further configured to:
provide the first entity with access to the resource in response to receiving the authorization from the third entity.

13. The system of Claim 11 or 12, wherein the first entity is further configured to:
generate the encrypted information (ei) based on the information (i), an encoding variable (y), and the third public key (e3), wherein ei = i ▷ y, wherein ▷ is a binary operation that satisfy axioms of a quandle, wherein, in authenticating the first entity, the third entity is further configured to:
generate a deciphered form (i') of the information (i) based on the encrypted information (ei), a third private key (f3) corresponding to the third public key (e3), and the encoding variable (y) to, wherein i' = ei ◁ y, and wherein ◁ is a binary operation that satisfy axioms of a quandle; and
determine that the deciphered form (i') of the information (i) satisfies the authentication request.

14. The system of any of Claims 10-13, wherein the third entity is configured to operate within the virtual environment.

15. A method for secure quandle-based cryptographic framework in virtual environments, the method comprising:
receiving, from a second entity, an authentication request to allow access to a resource associated with the second entity, wherein the authentication request comprises a second public key (e2) associated with the second entity;
encrypting, using a quandle-based cryptographic framework, information (i) associated with the first entity using a third public key (e3), wherein the third public key (e3) is associated with a third entity; and
transmitting, to the third entity, the encrypted information (ei) and the second public key (sk),
wherein the third entity is configured to authenticate the first entity based on the authentication request and the encrypted information (ei).
